# EUROPÄISCHE PATENTSCHRIFT

(11) **EP 2 826 139 B1**
(45) Veröffentlichungstag und Bekanntmachung des Hinweises auf die Patenterteilung: **20.07.2016**
(21) Anmeldenummer: 13709207.8
(22) Anmeldetag: 14.03.2013
(51) Int. Cl.: H02M 3/335, H02M 1/14

(54) **STROMREGELUNG FÜR GLEICHSPANNUNGSWANDLER**
CURRENT CONTROL FOR DC-DC CONVERTERS
RÉGULATION DU COURANT POUR CONVERTISSEURS DE COURANT CONTINU

(30) Priorität: 14.03.2012 DE 102012204035
(43) Veröffentlichungstag der Anmeldung: 21.01.2015
(73) Patentinhaber: Flexible Elektrische Netze FEN GmbH, 52074 Aachen (DE)
(72) Erfinder: ENGEL, Stefan, 52064 Aachen (DE); DE DONCKER, Rik W. A. A., B-3000 Leuven (BE)
(74) Vertreter: Jostarndt, Hans-Dieter
(86) Internationale Anmeldenummer: PCT/EP2013/055230
(87) Internationale Veröffentlichungsnummer: WO 2013/135811

(56) Entgegenhaltungen:
- US-A- 5 027 264

## Beschreibung

### Technisches Gebiet der Erfindung

Die Erfindung bezieht sich auf Gleichspannungswandler mit einer sogenannten Dual-Active-Bridge (DAB) -Topologie und ein Verfahren zum Betreiben dieser Gleichspannungswandler.

### Stand der Technik

Ein Gleichspannungswandler, auch DC-DC-Wandler genannt, bezeichnet eine elektrische Schaltung, welche eine am Eingang zugeführte Gleichspannung in eine Gleichspannung mit höherem, niedrigerem oder invertiertem Spannungsniveau umwandelt. Gleichspannungswandler befinden sich beispielsweise in Schaltnetzteilen von PC-Netzteilen, Notebooks, Mobiltelefonen, Kleinmotoren, HiFi-Geräten. Die Vorteile gegenüber Linearnetzteilen liegen im besseren Wirkungsgrad und geringerer Wärmeentwicklung. Bei einem linearen Spannungsregler oder einem Vorwiderstand hingegen wird die überflüssige Spannung einfach "verheizt".

DC-DC-Wandler werden auch als vollständig gekapselte Wandlermodule angeboten, welche teilweise für die direkte Bestückung auf Leiterplatten vorgesehen sind. Die Ausgangsspannung (Sekundärspannung) kann je nach Bauart kleiner, gleich oder größer als die Eingangsspannung (Primärspannung) sein. Am bekanntesten sind die Baugruppen, welche eine Kleinspannung auf eine galvanisch getrennte Kleinspannung übersetzen. Die gekapselten DC-DC-Wandler werden beispielsweise für Isolationsspannungen von 1,5 kV bis über 3 kV angeboten und dienen der Stromversorgung kleiner Verbraucher in Gleichspannungsnetzen wie z.B. an 24 V in Industrieanlagen oder an 48 V in der Telekommunikation oder im Bereich elektronischer Baugruppen beispielsweise 5 Volt für Digitalschaltungen oder ±15 Volt für den Betrieb von Operationsverstärkern. Gleichspannungswandler werden nach verschiedenen Kriterien klassifiziert und in verschiedene Topologien (Art des Aufbaus eines verzweigten Netzes an Stromwegen) eingeteilt. Im Gegensatz zu unidirektionalen Wandlern ist es bei bidirektionalen Gleichspannungswandlern unerheblich, welcher Anschluss als Eingang und welcher Anschluss als Ausgang definiert wird. Eine bidirektionale Energieflussrichtung erlaubt sowohl einen Leistungsfluss vom definierten Eingang (Primärseite) zum Ausgang (Sekundärseite) hin als auch umgekehrt.

Bei Gleichspannungswandlern, die auf dem Funktionsprinzip einer "Dual Active Bridge (DAB)"-Topologie beruhen, wird die DC-Eingangsspannung in einem Eingangswandler zu einer AC-Spannung umgewandelt und damit ein Transformator gespeist. Der Ausgang des Transformators ist mit einem Ausgangswandler verbunden, der die AC-Spannung wieder in eine DC-Ausgangsspannung für eine Last umwandelt. Diese DC/DC-Wandler können in einphasigen oder mehrphasigen Konfigurationen implementiert werden. Solche DAB-DC/DC-Wandlertopologien, wie beispielsweise in Dokument US 5027264 offenbart, sind hoch effiziente Wandlertopologien, die einen bidirektionalen Energiefluss, eine galvanische Trennung über den Transformator und einen Betrieb bei hohen Spannungen ermöglichen. Dieser Wandlertyp ist besonders geeignet für den Einsatz in Mittelspannungs-DC-Netzen.

Bei einem Gleichspannungswandler mit "Dual Active Bridge (DAB)"-Topologie wird die übertragene Leistung durch Variation des Phasenwinkels zwischen der Spannung auf der Primärseite und der Spannung auf der Sekundärseite eingestellt. Soll die übertragene Leistung sprunghaft geändert werden, kommt es zu ungewünschten Oszillationen und einer unsymmetrischen Aufteilung der Ströme in den Phasen. Die Oszillation klingt mit der Zeitkonstante L/R ab, wobei L die Summe aus der Streuinduktivität der Primärwicklung und der primärseitig bezogenen Streuinduktivität der Sekundärwicklung des Transformators bezeichnet, und R die Summe aus dem Widerstand der Primärwicklung und dem primärseitig bezogenen Widerstand der Sekundärwicklung ist. Es wäre daher wünschenswert, dass die Oszillationen zeitlich schnell abklingen, was eine kleine Zeitkonstante L/R voraussetzen würde. Dagegen würden die Oszillationen bei Wicklungen mit einer erhöhten Streuinduktivität und/oder niedrigen ohmschen Verlusten nur langsam abklingen. Eine hohe Streuinduktivität ist aber gerade für den Einsatz dieses Wandlers in einem weiten Spannungsbereich zwischen Primär- und Sekundärspannung von hoher Bedeutung. Dagegen ist ein kleiner Widerstand R wünschenswert, um einen solchen Wandler mit geringen ohmschen Verlusten und hoher Effizienz und damit höherem Wirkungsgrad bereitzustellen. Durch diese Randbedingungen besitzen die nach einer Leistungsänderung auftretenden Oszillationen eine lange Zeitkonstante. Daher wird bei üblichen DAB-DC/DC-Wandlern üblicherweise der Phasenwinkel nur langsam geändert, um die Oszillation möglichst zu vermeiden. Die langsame Änderung des Phasenwinkels führt allerdings zu einer verringerten Dynamik der Stromregelung, womit lediglich eine langsame Regelung des Stroms möglich wäre. Bei DAB-DC/DC-Wandlern, die eine hohe Dynamik besitzen sollen, ist dieses Verfahren der Oszillationsverminderung somit nicht anwendbar und man erhält ungewünschte Oszillationen und eine unsymmetrische Aufteilung der Ströme in den Phasen.

### Zusammenfassung der Erfindung

Es ist eine Aufgabe der vorliegenden Erfindung, einen DAB-DC/DC-Wandler zur Verfügung zu stellen, der eine schnelle Regelung des Stroms bei gleichzeitiger Minimierung der Oszillationen beim DC-Strom bei Leistungsänderungen ermöglicht.

Diese Aufgabe wird gelöst durch ein Verfahren zum Betrieben eines mindestens dreiphasigen Gleichspannungswandler mit einer Primärseite umfassend mindestens drei aktiv geschaltete primärseitige Spannungsbrücken mit mehreren aktiven Schaltern zur Umwandlung einer DC-Eingangsspannung in primärseitige Wechselspannungen für jede der primärseitigen Spannungsbrücken und einer Sekundärseite umfassend mindestens drei aktiv geschaltete sekundärseitige Spannungsbrücken mit mehreren aktiven Schaltern zur Umwandlung der sekundärseitigen Wechselspannungen für jede der sekundärseitigen Spannungsbrücken in eine gemeinsame DC-Ausgangsspannung, wobei jede der primärseitigen Spannungsbrücken mit einer der sekundärseitigen Spannungsbrücken über einen mehrphasigen Transformator oder über jeweils einen Transformator zu jeweils einer Phase gekoppelt ist, wobei die primärseitigen- und sekundärseitigen Wechselspannungen mit einer Periode T um einen Phasenwinkel ϕ verschoben sind, umfassend die Schritte des Einstellens des Phasenwinkels ϕ von einem ersten Phasenwinkel ϕ1 auf einen zweiten Phasenwinkel ϕ2 als Schaltvorgang zum Übertragen von Leistung von der Primärauf die Sekundärseite, wobei die primär- und sekundärseitigen Spannungsbrücken in dem Schaltvorgang so geschaltet werden, dass die Phasenwinkel ϕ der einzelnen Phasen im Schaltvorgang unabhängig voneinander eingestellt werden. Mit dem obigen Gleichspannungswandler wird ein DAB-DC/DC-Wandler zur Verfügung gestellt, der eine schnelle Änderung des Phasenwinkels bei gleichzeitiger Minimierung oder Vermeidung der Oszillationen beim DC-Strom bei Leistungsänderungen ermöglicht. Ohne die Minimierung oder Vermeidung der Oszillationen beim DC-Strom könnte der Phasenwinkel nur langsam geändert werden. Mit der zeitlich unabhängigen Einstellung des Phasenwinkels ϕ für die einzelnen Phasen im Schaltvorgang ermöglicht die vorliegende Erfindung eine schnelle Änderung des Phasenwinkels, was ein hochdynamisches Stellen des DC-Stroms (schnelle Regelung des Stroms) und damit eine schnelle Leistungsübertragung ermöglicht. Das erfindungsgemäße Verfahren ermöglicht gerade eine hochdynamische Änderung der übertragenen Leistung im Gegensatz zum Stand der Technik, wo DAB-DC/DC-Wandler im stationären Betrieb verwendet werden. Ferner können Unsymmetrien in den Phasenströmen durch das erfindungsgemäße Verfahren vermeiden werden. In einer Ausführungsform wird dazu während des Schaltvorgangs der Phasenwinkel ϕ der verschiedenen Phasen unabhängig von fallenden und steigenden Flanken der primärseitigen- und sekundärseitigen Wechselspannungen eingestellt. Damit sind die erfindungsgemäßen Gleichspannungswandler insbesondere als DC/DC-Wandler für mittlere bis hohe Leistungen und sogenannte Pulsed-Power-Anwendungen mit hohen Anforderungen an die Dynamik geeignet.

Die Primärseite bezeichnet den Teil des DC/DC-Wandlers, der der energetischen Energiequelle zugewandt ist. Entsprechend bezeichnet die Sekundärseite die andere Seite des Transformators, die mit der elektrischen Last verbunden ist. Hierbei sind die Primär- und Sekundärseite gegeneinander durch den Transformator isoliert. Ist der DAB DC/DC-Wandler bidirektional ausgeführt, so kann die Primärseite in einem bidirektionalen Gleichspannungswandler gegebenenfalls in einem anderen bidirektionalen Gleichspannungswandler die Sekundärseite darstellen. Der Gleichspannungswandler gemäß der vorliegenden Erfindung kann dabei als ein drei- oder mehrphasiger DAB DC/DC-Wandler ausgeführt sein, beispielsweise auch als ein fünfphasiger DAB DC/DC-Wandler.

Die DC-Eingangsspannung liegt an den Spannungsbrücken mit den aktiven Schaltern an und wird in den Spannungsbrücken durch die Schaltung der aktiven Schalter (Schaltvorgang) in eine Wechselspannung umgewandelt. Da die Schalter in der Regel komplett eingeschaltet werden, ergeben sich an den Ausgangsbrücken annähernd rechteckförmige Wechselspannungen (Rechteckspannung). Die Spannung über den Transformatorwicklungen wird dadurch stufenförmig. Gegebenenfalls sind die Flanken der Rechteckspannung durch die Verwendung von sogenannten Snubbern nicht unendlich steil, d. h. die Form weicht von der Rechteckspannung (Stufenform an den Transformatorwicklungen) ab. Snubber werden zur Gewährleistung einer dynamischen Spannungssymmetrierung bei Schaltvorgängen verwendet (Snubbernetzwerk). Als Snubbernetzwerk bezeichnet man eine elektrische Schaltung mit Snubbergliedern, die z.B. störende Hochfrequenzen oder Spannungsspitzen, die meist beim Schalten von induktiven Lasten auftreten, bei einer abrupten Unterbrechung des Stromflusses neutralisieren soll. Snubberglieder begrenzen die Spannungsanstiegsgeschwindigkeit oder die Stromanstiegsgeschwindigkeit an Halbleitern.

Je nach Ausführungsform können zwei oder mehr aktive Schalter pro Spannungsbrücke verwendet werden. Geeignete Schalter für die Spannungsbrücken sind aktive Halbleiterschalter (Leistungshalbleiter) wie beispielsweise abschaltbare Thyristoren, Transistoren, MOSFETs, IGBTs ("insulated gate bipolar transistors") oder IGCTs ("Integrated Gate-Commutated Thyristor") mit intelligenten Gate-Treibern. Der Fachmann kann alternativ auch andere geeignete aktive Schalter verwenden.

Der Transformator bezeichnet hier den magnetischen Kreis - meist ein Ferrit- oder Eisenkern -, mit den entsprechenden Wicklungen der primärseitigen und sekundärseitigen Spannungsbrücken um den magnetischen Kern herum. Sofern jede der Phasen einen separaten Transformator umfasst, sind nur die Leiter einer primärseitigen Phase und der entsprechenden anderen sekundärseitigen Phase um den dieser Phase zugeordneten Transformator gewickelt. Die magnetischen Kerne der Transformatoren der einzelnen Phasen sind dann physikalisch getrennt voneinander. Ein mehrphasiger Transformator bezeichnet dagegen einen Transformator, der einen gemeinsamen magnetischen Kern für alle Phasen besitzt, wobei die Wicklungen der primär- und sekundärseitigen Spannungsbrücken der einzelnen Phasen an verschiedenen Bereichen des magnetischen Kern angeordnet sind. In einer Ausführungsform für einen dreiphasigen Gleichspannungswandler gemäß der vorliegenden Erfindung ist der mehrphasige Transformator ein dreiphasiger Transformator. Das Prinzip eines DAB-Gleichspannungswandlers ist es, in beiden Fällen über die AC-Spannungen am Transformator einen gezielten Spannungsabfall über der Streuinduktivität des Transformators hervorzurufen und damit den Leistungsfluss zu steuern. Aktiv geschaltete Spannungsbrücken ermöglichen die unabhängige Steuerung des Verschiebungswinkels (Phasenwinkels) zwischen den am Transformator anliegenden primär- und sekundärseitigen Wechselspannungen und damit die gezielte Steuerung des Leistungsflusses.

Der Phasenwinkel ϕ bezeichnet dabei die Verschiebung der primärseitigen- und sekundärseitigen Wechselspannungen mit jeweils der Periode T gegeneinander. Der erste Phasenwinkel ϕ1 bezeichnet die Verschiebung der primärseitigen- und sekundärseitigen Wechselspannungen gegeneinander vor Beginn eines Schaltvorgangs. Der zweite Phasenwinkel ϕ2 bezeichnet die Verschiebung der primärseitigen- und sekundärseitigen Wechselspannungen gegeneinander nach Beendigung des Schaltvorgangs. Während des Schaltvorgangs können die Phasenwinkel ϕ auch einen oder mehrere Werte zwischen ϕ1 und ϕ2 einnehmen, wobei ϕ1 größer oder kleiner als ϕ2 sein kann. Hierbei kann der Phasenwinkel ϕ positive und negative Werte annehmen. Ein positiver Wert ϕ zwischen einer ersten und einer zweiten Wechselspannung bedeutet, dass die zweite Wechselspannung der ersten Wechselspannung im Kurvenverlauf der Wechselspannungen nacheilt.

Entsprechend bedeutet ein negativer Wert ϕ zwischen einer ersten und einer zweiten Wechselspannung, dass die zweite Wechselspannung der ersten Wechselspannung im Kurvenverlauf der Wechselspannungen vorauseilt (oder voreilt).

In einer Ausführungsform werden die Phasenwinkel ϕ der einzelnen Phasen zur Symmetrierung der Ströme in den Phasen unterschiedlich eingestellt. Das Verfahren ist nicht auf die Verwendung gleicher Phasenwinkel für alle Phasen beschränkt. Dadurch können beispielsweise Unsymmetrien der Transformatoren so ausgeglichen werden, dass dennoch eine symmetrische Stromaufteilung in den Phasen vorliegt.

In einer weiteren Ausführungsform ist der Gleichspannungswandler ein dreiphasiger Gleichspannungswandler mit drei aktiv geschalteten primärseitigen Spannungsbrücken mit jeweils zwei oder mehr aktiven Schaltern und drei aktiv geschalteten sekundärseitigen Spannungsbrücken mit jeweils zwei oder mehr aktiven Schaltern, wobei während des Schaltvorgangs die Einstellung des Phasenwinkels ϕ2 für alle drei Phasen bei den gleichen Flanken (d.h. entweder nur bei den steigenden Flanken der Wechselspannungen der Phasen oder nur an den fallenden Flanken der Wechselspannungen der Phasen) der primär- und sekundärseitigen Wechselspannung an den primär- und sekundärseitigen Spannungsbrücken erfolgt. Ein solcher dreiphasiger Gleichspannungswandler mit DAB-Topologie hat beispielsweise den Vorteil, dass er durch die verbesserte Nutzung der verfügbaren Scheinleistung des Transformers signifikant die verfügbare Leistungsdicht erhöht. Die Anzahl der Schalter kann in einer Ausführungsform aus jeweils zwei Schaltern pro Spannungsbrücke bestehen. In anderen Ausführungsformen können beispielsweise auch vier Schalter pro Spannungsbrücke wie bei einer NPC-Topologie verwendet werden. In einer Ausführungsform ist der Gleichspannungswandler gemäß der vorliegenden Erfindung ein dreiphasiger DAB NPC DC/DC-Wandler. NPC steht hier für "neutral-point-clamped". Die Niveaus der Spannungen können beim dreiphasigen DAB NPC DC/DC-Wandler über Clamping-Dioden symmetrisch eingestellt werden, so dass die Mittelspannung dem Spannungs-Nullniveau entspricht, ohne dass dafür Symmetrierungsnetzwerke und/oder Treiber erforderlich wären. In alternativen Ausführungsformen können anstatt der Clamping-Dioden IGBTs (Bipolartransistoren mit isolierter Gate-Elektrode) (ANPC-Umrichter) verwendet oder Kapazitäten in sogenannten FLCs zur Spannungsaufteilung eingesetzt werden.

In einer bevorzugten Ausführungsform des Verfahrens für einen dreiphasigen Gleichspannungswandler umfasst dieses die weiteren Schritte:
- erstes Schalten der primärseitigen/sekundärseitigen Wechselspannung der zweiten primärseitigen/sekundärseitigen Spannungsbrücke zum Zeitpunkt t0 und erstes um den Phasenwinkel ϕ2 verschobenes Schalten der sekundärseitigen/primärseitigen Wechselspannung der zweiten sekundärseitigen/primärseitigen Spannungsbrücken,
- erstes Schalten der primärseitigen/sekundärseitigen Wechselspannung der ersten primärseitigen/sekundärseitigen Spannungsbrücke zum Zeitpunkt t0 + T/6 und erstes um den Phasenwinkel ϕ1 verschobenes Schalten der sekundärseitigen/primärseitigen Wechselspannung der ersten sekundärseitigen/primärseitigen Spannungsbrücke,
- erstes Schalten der primärseitigen/sekundärseitigen Wechselspannung der dritten primärseitigen/sekundärseitigen Spannungsbrücke zum Zeitpunkt t0 + T/3 und erstes um den Phasenwinkel ϕ2 verschobenes Schalten der sekundärseitigen/primärseitigen Wechselspannung der dritten sekundärseitigen/primärseitigen Spannungsbrücke,
- zweites Schalten der primärseitigen/sekundärseitigen Wechselspannung der zweiten primärseitigen/sekundärseitigen Spannungsbrücke zum Zeitpunkt t0 + T/2 und zweites um den Phasenwinkel ϕ2 verschobenes Schalten der sekundärseitigen/primärseitigen Wechselspannung der zweiten sekundärseitigen/sekundärseitigen Spannungsbrücke,
- zweites Schalten der primärseitigen/sekundärseitigen Wechselspannung der ersten primärseitigen/sekundärseitigen Spannungsbrücke zum Zeitpunkt t0 + 2/3*T und zweites um den Phasenwinkel ϕ2 verschobenes Schalten der sekundärseitigen/primärseitigen Wechselspannung der ersten sekundärseitigen/primärseitigen Spannungsbrücke,
- zweites Schalten der primärseitigen/sekundärseitigen Wechselspannung der dritten primärseitigen/sekundärseitigen Spannungsbrücke zum Zeitpunkt t0 + 5/6*T und zweites um den Phasenwinkel ϕ2 verschobenes Schalten der sekundärseitigen/primärseitigen Wechselspannung der dritten sekundärseitigen/primärseitigen Spannungsbrücke.

Mit diesem Verfahren wird zusätzlich eine Unsymmetrie der Phasenströme vermieden. Der Sollstrom wird hier bereits nach T/3 ohne Anregung von Oszillationen erreicht. Falls bei einer Änderung des Phasenwinkels auch das Vorzeichen des Phasenwinkels geändert wird, tritt allerdings kurzzeitig nach der Änderung des Phasenwinkels ein erhöhter Phasenstrom auf. Das Verfahren ist dabei auf Phasenverschiebungen von 120° zwischen den Spannungen der ersten, zweiten und dritten primärseitige Spannungsbrücken beziehungsweise der ersten, zweiten und dritten sekundärseitigen Spannungsbrücken anwendbar, allerding ist das Verfahren nicht auf Phasenverschiebungen von 120° beschränkt. Ebenso ist das Verfahren nicht auf die obige Reihenfolge der Schaltungen der einzelnen Brücken beschränkt. Das Verfahren kann auch bei einer zyklischen Vertauschung der Schaltungen oder bei einer Umkehr der Schaltungen angewendet werden. Die Bezeichnungen "primärseitig/sekundärseitig" beziehungsweise "sekundärseitig/primärseitig" bezeichnen die entsprechenden Schaltungen entweder für die vor oder aber für die nach dem Schrägstrich "/"genannten Seiten. Hierbei entsprechen die erstgenannten Seiten (vor den Schrägstrich) den Schaltungen für einen Stromfluss in die eine Richtung und die nach dem Schrägstrich genannten Seiten entsprechen den Schaltungen für den umgekehrten Stromfluss. Mit diesem Verfahren sind auch eine schnelle Leistungsflussumkehr und eine symmetrische Stromverteilung in den drei Phasen möglich. Sind die primär- und sekundärseitigen Wechselspannungen um einen positiven Phasenwinkel verschoben, so schaltet die sekundärseitige Wechselspannung nacheilend zur primärseitigen Wechselspannung. Sind dagegen die primär- und sekundärseitigen Wechselspannungen um einen negativen Phasenwinkel verschoben, so schaltet die sekundärseitige Wechselspannung vorauseilend (oder voreilend) zur primärseitigen Wechselspannung. Beide dieser Möglichkeiten sind vom obigen Verfahren umfasst.

In einer anderen alternativen Ausführungsform sind die Phasenwinkel ϕ für steigende und fallende Flanken unterschiedlich. In einer bevorzugten Ausführungsform ist dabei der Gleichspannungswandler ein dreiphasiger Gleichspannungswandler mit drei aktiv geschalteten primärseitigen Spannungsbrücken mit jeweils zwei oder mehr aktiven Schaltern und drei aktiv geschalteten sekundärseitigen Spannungsbrücken mit jeweils zwei oder mehr aktiven Schaltern, wobei der Schaltvorgang drei sukzessive Schaltungen der primär- und sekundärseitigen Wechselspannungen der Spannungsbrücken der jeweiligen drei Phasen um den Phasenwinkels ϕ = (ϕ1 + ϕ2)/2 umfasst. Die Anzahl der Schalter kann in einer Ausführungsform aus jeweils zwei Schaltern pro Spannungsbrücke bestehen. In anderen Ausführungsformen können beispielsweise auch 4 Schalter pro Spannungsbrücke wie bei einer NPC-Topologie verwendet werden. In einer Ausführungsform ist der Gleichspannungswandler gemäß der vorliegenden Erfindung ein dreiphasiger DAB NPC DC/DC-Wandler. NPC steht hier für "neutral-point-clamped". Die Niveaus der drei Spannungsstufen können beim dreiphasigen DAB NPC DC/DC-Wandler über Clamping-Dioden symmetrisch eingestellt werden, so dass die Mittelspannung dem Spannungs-Nullniveau entspricht, ohne dass dafür Symmetrierungsnetzwerke und/oder Treiber erforderlich wären. In alternativen Ausführungsformen können anstatt der Clamping-Dioden IGBTs (Bipolartransistoren mit isolierter Gate-Elektrode) ANPC-Umrichter verwendet oder Kapazitäten in sogenannten FLCs zur Spannungsaufteilung eingesetzt werden. In einer bevorzugten Ausführungsform umfasst das Verfahren dabei die weiteren Schritte:
- Erstes Schalten der primärseitigen/sekundärseitigen Wechselspannung der zweiten primärseitigen/sekundärseitigen Spannungsbrücke zum Zeitpunkt t0 und erstes um den Phasenwinkel ϕ = (ϕ1 + ϕ2)/2 verschobenes Schalten der sekundärseitigen/primärseitigen Wechselspannung der zweiten sekundärseitigen/primärseitige Spannungsbrücken,
- Erstes Schalten der primärseitigen/sekundärseitigen Wechselspannung der ersten primärseitigen/sekundärseitigen Spannungsbrücke zum Zeitpunkt t0 + T/6 und erstes um den Phasenwinkel ϕ = (ϕ1 + ϕ2)/2 verschobenes Schalten der sekundärseitigen/primärseitigen Wechselspannung der ersten sekundärseitigen/primärseitigen Spannungsbrücke,
- Erstes Schalten der primärseitigen/sekundärseitigen Wechselspannung der dritten primärseitigen/sekundärseitigen Spannungsbrücke zum Zeitpunkt t0 + T/3 und erstes um den Phasenwinkel ϕ = (ϕ1 + ϕ2)/2 verschobenes Schalten der sekundärseitigen/primärseitigen Wechselspannung der dritten sekundärseitigen/primärseitigen Spannungsbrücke,
- Widerholen der voranstehenden Schritte als jeweiliges zweites Schalten der primärseitigen/sekundärseitigen Wechselspannung und zweites um den Phasenwinkel ϕ2 verschobenes Schalten der sekundärseitigen/primärseitigen Wechselspannung für die zweiten, ersten und dritten primär- und sekundärseitigen Spannungsbrücken.

Mit diesem alternativen Verfahren wird ebenfalls zusätzlich eine Unsymmetrie der Phasenströme vermieden. Der Sollstrom wird hier bereits nach T/2 erreicht. Dieses Verfahren zeichnet sich dadurch aus, dass keine Oszillationen angeregt werden und dass auch nicht kurzzeitig nach der Änderung des Phasenwinkels ein erhöhter Phasenstrom auftritt. Dieses Verfahren erreicht also gegenüber dem voranstehenden alternativen Verfahren den Sollstrom später (T/2 anstatt T/3), dafür aber ohne einen kurzzeitig leicht erhöhten Phasenstrom, auch bei Vorzeichenänderung des Phasenwinkels. Das Verfahren ist auf Phasenverschiebungen von 120° zwischen den Spannungen der ersten, zweiten und dritten primärseitige Spannungsbrücken beziehungsweise der ersten, zweiten und dritten sekundärseitigen Spannungsbrücken anwendbar, allerding ist das Verfahren ebenfalls nicht auf Phasenverschiebungen von 120° beschränkt. Ebenso ist das Verfahren nicht auf die obige Reihenfolge der Schaltungen der einzelnen Brücken beschränkt. Das Verfahren kann auch bei einer zyklischen Vertauschung der Schaltungen oder bei einer Umkehr der Schaltungen angewendet werden. Die Bezeichnungen "primärseitig/sekundärseitig" beziehungsweise "sekundärseitig/primärseitig" bezeichnen die entsprechenden Schaltungen entweder für die vor oder aber für die nach dem Schrägstrich "/"genannten Seiten. Hierbei entsprechen die erstgenannten Seiten (vor den Schrägstrich) den Schaltungen für einen Stromfluss in die eine Richtung und die nach dem Schrägstrich genannten Seiten entsprechen den Schaltungen für den umgekehrten Stromfluss. Mit diesem Verfahren sind auch eine schnelle Leistungsflussumkehr und eine symmetrische Stromverteilung in den drei Phasen möglich. Sind die primär- und sekundärseitigen Wechselspannungen um einen positiven Phasenwinkel verschoben, so schaltet die sekundärseitige Wechselspannung nacheilend zur primärseitigen Wechselspannung. Sind dagegen die primär- und sekundärseitigen Wechselspannungen um einen negativen Phasenwinkel verschoben, so schaltet die sekundärseitige Wechselspannung vorauseilend (oder voreilend) zur primärseitigen Wechselspannung. Beide dieser Möglichkeiten sind vom obigen Verfahren umfasst.

In einer weiteren Ausführungsform umfasst der Schaltvorgang zur Einstellung des zweiten Phasenwinkels ϕ2 eine oder mehrere Perioden T der primärseitigen- und sekundärseitigen Wechselspannungen und der Phasenwinkel ϕ zwischen den primärseitigen- und sekundärseitigen Wechselspannungen wird an den Flanke schrittweise in mehreren Schritten auf den zweiten Phasenwinkel ϕ2 eingestellt. In einer bevorzugten Ausführungsform erfolgt dabei die schrittweise Einstellung des Phasenwinkels ϕ2 in gleichgroßen Schritten linear. Dadurch können mögliche leicht erhöhte Phasenströme noch besser unterdrückt werden. Dieses Verfahren ist von Vorteil, wenn der Strom innerhalb einer Zeitspanne größer T/2 linear geändert werden soll.

In einer weiteren Ausführungsform werden die Phasenwinkel ϕ der steigenden und fallenden Flanken im Schaltvorgang ausgehend von den voranstehenden Phasenwinkeln zur Kompensation von Transformator- und Schaltereinflüssen angepasst. Somit können Einflüsse ausgeglichen werden, die nicht alleine schon durch die Topologie vermeidbar sind.

In einer weiteren Ausführungsform wird der Gleichspannungswandler so betrieben, dass die Phasenverschiebungen zwischen den primärseitigen Wechselspannungen der primärseitigen Spannungsbrücken untereinander und die Phasenverschiebungen zwischen den sekundärseitigen Wechselspannungen der sekundärseitigen Spannungsbrücken untereinander von 120° abweichen. Damit können bei Beibehaltung der voranstehend ausgeführten Vorteile mögliche Unsymmetrien des Transformators ausgeglichen werden.

Die Erfindung bezieht sich auch auf ein System aus einem mindestens dreiphasigen Gleichspannungswandler mit einer Primärseite umfassend mindestens drei aktiv geschaltete primärseitige Spannungsbrücken mit mehreren aktiven Schaltern zur Umwandlung einer DC-Eingangsspannung in primärseitige Wechselspannungen für jede der primärseitigen Spannungsbrücken und einer Sekundärseite umfassend mindestens drei aktiv geschaltete sekundärseitige Spannungsbrücken mit mehreren aktiven Schaltern zur Umwandlung der sekundärseitigen Wechselspannungen für jede der sekundärseitigen Spannungsbrücken in eine gemeinsame DC-Ausgangsspannung, wobei jede der primärseitigen Spannungsbrücken mit einer der sekundärseitigen Spannungsbrücken über einen mehrphasigen Transformator oder über jeweils einen Transformator zu jeweils einer Phase zur Transformierung der primärseitigen Wechselspannung in die sekundärseitige Wechselspannung gekoppelt ist, wobei die primärseitigen- und sekundärseitigen Wechselspannungen mit einer Periode T um einen Phasenwinkel ϕ verschoben sind, und mindestens einer Steuereinheit, die dazu ausgestaltet ist, die Steuerung der aktiven Schalter der primär- und sekundärseitigen Spannungsbrücken des mindestens dreiphasigen Gleichspannungswandlers gemäß dem Verfahren nach der vorliegenden Erfindung auszuführen. Die Steuereinheit gemäß der vorliegenden Erfindung könnte dabei als Steuerung unter Verwendung eines oder mehrere DSPs (digitaler Signalprozessor), FPGAs (sogenannte "field programmable gate arrays"), CLPDs (sogenannte "complex programmable logic devices"), eines Microcontrollers oder unter Verwendung einer Kombination der voranstehend genannten Bauteile ausgeführt sein.

In einer Ausführungsform des Systems ist der Gleichspannungswandler ein dreiphasiger Gleichspannungswandler mit drei aktiv geschalteten primärseitigen Spannungsbrücken mit jeweils zwei oder mehr aktiven Schaltern und drei aktiv geschalteten sekundärseitigen Spannungsbrücken mit jeweils zwei oder mehr aktiven Schaltern.

Des Weiteren kann der Gleichspannungswandler auf der Primärseite und/oder auf der Primärseite einen Tiefpassfilter umfassen. Ebenso können ein oder mehrere Kondensatoren auf der Primär und/oder Sekundärseite zur Glättung des Stroms angeordnet sein. Das erfindungsgemäße Verfahren kann auch auf die DAB-DC/DC-Wandlertopologie mit Kondensatoren in Reihe oder parallel zu den Transformatorwicklungen (oder in anderer Anordnung) angewendet werden, beispielsweise für Resonanzwandler oder Resonant DAB Converter.

### Kurzbeschreibung der Zeichnungen

Diese und andere Aspekte der vorliegenden Erfindung sind in den Zeichnungen im Detail dargestellt.
- Fig.1:: zeigt eine Ausführungsform einer Topologie eines Gleichspannungswandlers (DAB-DC/DC-Wandlers), der für die Ausführung des erfindungsgemäßen Verfahrens geeignet ist.
- Fig.2:: zeigt die simulierten Verläufe von (a) Phasenwinkel, (b) Phasenstrom und (c) DC-Strom für einen Gleichspannungswandler nach Fig.1 mit einem Schaltverfahren nach dem Stand der Technik mit Oszillationen.
- Fig.3:: zeigt eine erste Ausführungsform des erfindungsgemäßen Verfahrens für einen dreiphasigen DAB-DC/DC-Wandlers.
- Fig.4:: zeigt die simulierten Verläufe von (a) Phasenwinkel, (b) Phasenstrom und (c) DC-Strom für einen Gleichspannungswandler nach Fig.1 mit einem erfindungsgemäßen Schaltverfahren gemäß der ersten Ausführungsform des Verfahrens nach Fig.3.
- Fig.5:: zeigt eine zweite Ausführungsform des erfindungsgemäßen Verfahrens für einen dreiphasigen DAB-DC/DC-Wandler.
- Fig.6:: zeigt die simulierten Verläufe von (a) Phasenwinkel, (b) Phasenstrom und (c) DC-Strom für einen Gleichspannungswandler nach Fig.1 mit einem erfindungsgemäßen Schaltverfahren gemäß der zweiten Ausführungsform des Verfahrens nach Fig.5.
- Fig.7:: System aus Gleichspannungswandler und Steuerung gemäß der vorliegenden Erfindung.

### Detaillierte Beschreibung von Ausführungsformen

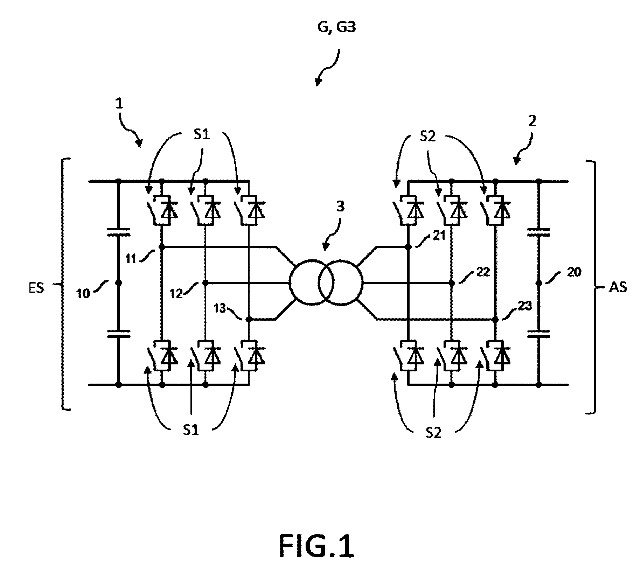

Figur 1 zeigt als Ausführungsform des Gleichspannungswandlers einen dreiphasigen Gleichspannungswandler G3 mit einer Primärseite 1 umfassend drei aktiv geschaltete primärseitige Spannungsbrücken 11, 12, 13 mit jeweils zwei aktiven Schaltern S1 zur Umwandlung einer DC-Eingangsspannung ES in primärseitige Wechselspannungen 111, 112, 113 für jede der primärseitigen Spannungsbrücken 11, 12, 13 und einer Sekundärseite 2 umfassend drei aktiv geschaltete sekundärseitige Spannungsbrücken 21, 22, 23 mit jeweils zwei aktiven Schaltern S2 zur Umwandlung der sekundärseitigen Wechselspannungen 211, 212, 213 für jede der sekundärseitigen Spannungsbrücken 21, 22, 23 in eine gemeinsame DC-Ausgangsspannung AS. Geeignete Schalter S1, S2 für die Spannungsbrücken sind beispielsweise aktive Halbleiterschalter (Leistungshalbleiter) wie beispielsweise abschaltbare Thyristoren, Transistoren, MOSFETs, IGBTs ("insulated gate bipolar transistors") oder IGCTs ("Integrated Gate-Commutated Thyristor") mit intelligenten GATE-Treibern. In anderen Ausführungsformen können die Anzahl der Spannungsbrücken und/oder die Anzahl der aktiven Schalter S1, S2 pro Spannungsbrücke variieren, beispielsweise in einer NPC-Topologie mit vier Schaltern pro Spannungsbrücke. Jede der primärseitigen Spannungsbrücken 11, 12, 13 ist mit einer der sekundärseitigen Spannungsbrücken 21, 22, 23 über einen mehrphasigen Transformator 3, beispielsweise einen dreiphasigen Transformator 3 in diesem Fall bei dem dreiphasigen Gleichspannungswandler G3, oder über jeweils einen separaten Transformator 3 zu jeweils einer Phase gekoppelt, wobei die primärseitig und sekundärseitig angelegten Wechselspannungen 111, 112, 113, 211, 212, 213 mit einer Periode T um einen Phasenwinkel ϕ verschoben sind. Zur Lastübertragung wird der Phasenwinkel von einem ersten Phasenwinkel ϕ1 auf einen zweiten Phasenwinkel ϕ2 im Schaltvorgang geschaltet. In dieser Ausführungsform sind primärseitig und sekundärseitig Kondensatoren 10, 20 zur Glättung der Spannung angeordnet. In anderen Ausführungsformen kann auf die Kondensatoren auch verzichtet werden oder die Kondensatoren können durch Tiefpassfilter ersetzt oder ergänzt werden. Die Topologie des hier gezeigten Gleichspannungswandlers als DAB DC/DC-Wandler kann für die Schaltverfahren gemäß dem Stand der Technik als auch für die Anwendung des erfindungsgemäßen Schaltverfahrens verwendet werden. In anderen Ausführungsformen kann der Gleichspannungswandler dafür auch mehr als drei Phasen besitzen. Die Steuereinheit zur Steuerung der Schalter ist hier nicht gezeigt.

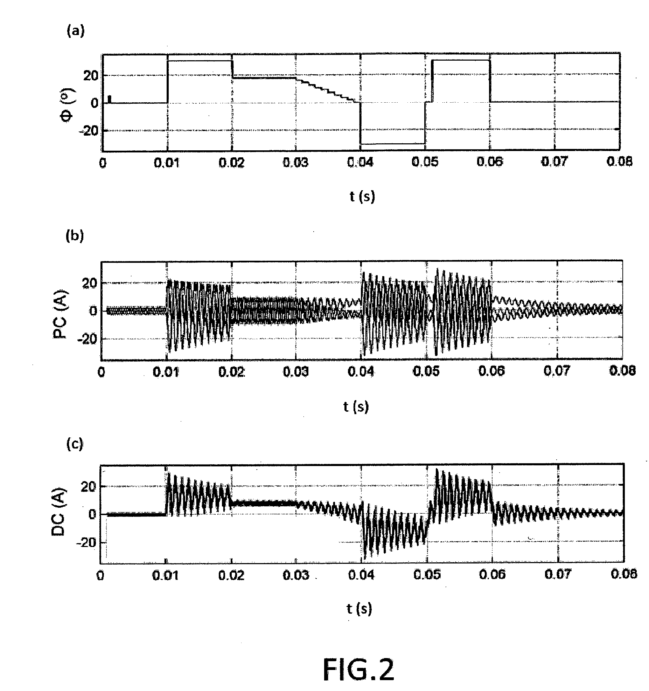

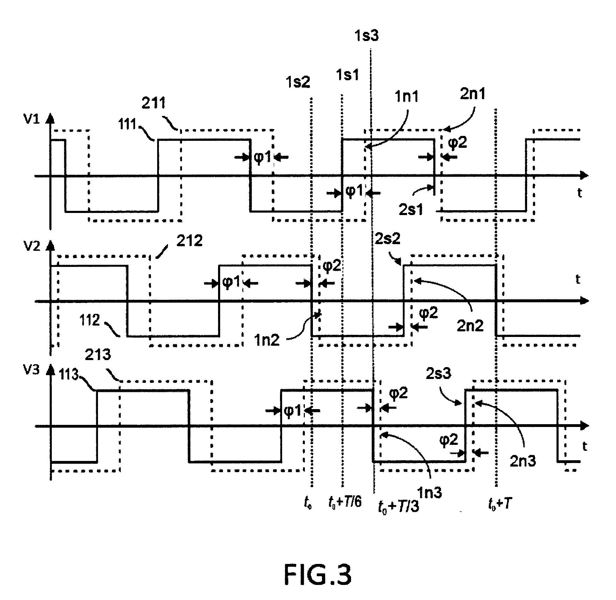

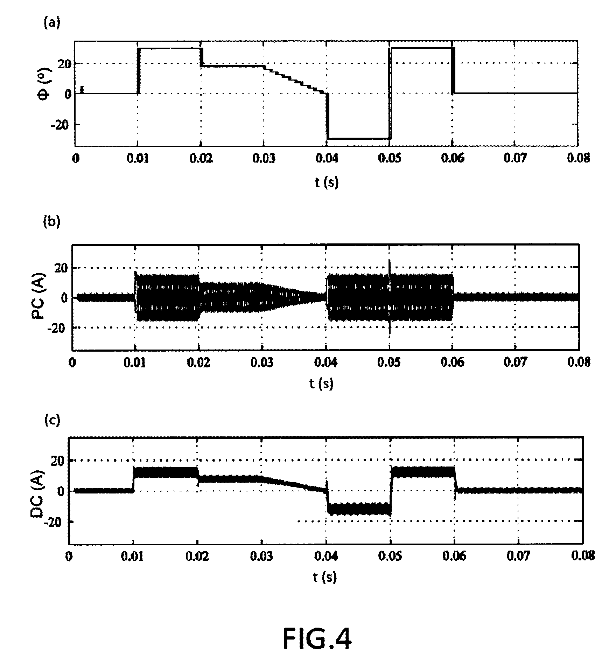

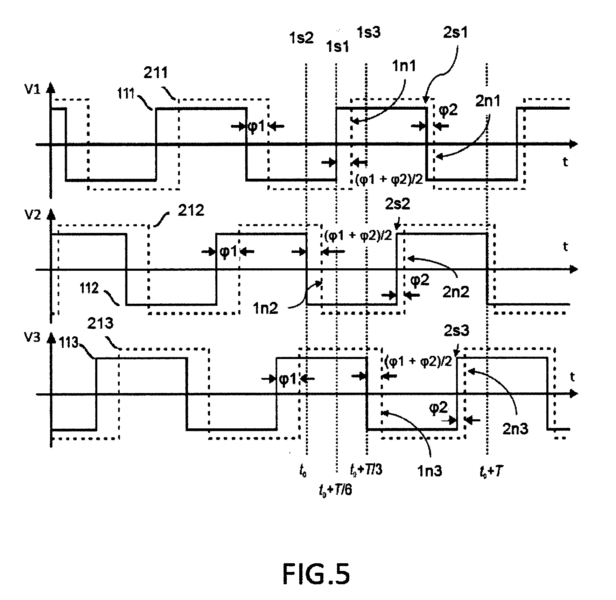

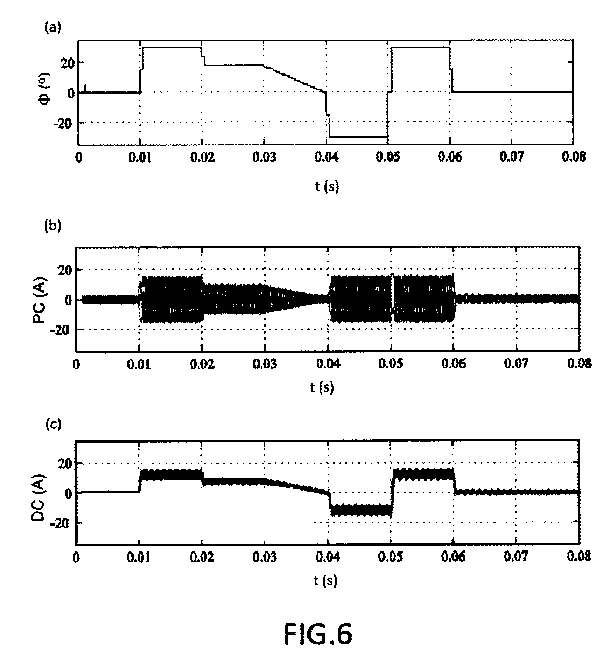

Fig.2 zeigt die simulierten Verläufe von (a) Phasenwinkel in Grad, (b) Phasenstrom in Ampere und (c) DC-Strom in Ampere für einen dreiphasigen Gleichspannungswandler nach Fig.1 mit einem Schaltverfahren nach dem Stand der Technik, das zu Oszillationen im DC-Strom führt, wenn der Phasenwinkel schnell geändert wird. Eine schnelle Änderung des Phasenwinkels ermöglicht schnelle Leistungsübertragungen. Die Simulationen wurden für Wechselspannungen in Form von Rechteckspannungen mit einer Frequenz 1 kHz, einem Übersetzungsverhältnis des Transformators von 1:1, einer primär- und sekundärseitigen Streuinduktivität von jeweils 1 mH, Widerständen der Primär- und Sekundärwicklungen von jeweils 100mΩ, einer Hauptinduktivität des Transformators von 100mH, einer primärseitigen Spannung von 500V, einer sekundärseitigen Spannung von 550V und mit der Annahme idealer Schalter (R=0 Ω bei geschlossenem Schalter und R = ∞ bei geöffnetem Schalter) als die Schalter S1, S2 durchgeführt. Dieselben Werte und Annahmen wurden für die Simulationen für Phasenwinkel, Phasenstrom und DC-Strom der erfindungsgemäßen Verfahren nach Fig.3 und 5 dargestellt in den Figuren 4 und 6 verwendet, um eine Vergleichbarkeit der dargestellten Verhalten (Stand der Technik im Vergleich zu den erfindungsgemäßen Verfahren) zu erreichen. Das Schaltverfahren nach dem Stand der Technik ändert den Phasenwinkel ϕ der drei Phasen nicht unabhängig voneinander, sondern mit einem gemeinsamen Schritt für alle Phasen, wie in Fig.2(a) gezeigt, so dass starke Oszillationen des DC-Stroms nach jeder Änderung des Phasenwinkels ϕ auftreten. Für die Darstellung der auftretenden Oszillationen bei einem Schaltverfahren gemäß dem Stand der Technik ist für den DC-Strom hier beispielshaft der DC-Eingangsstrom dargestellt, allerdings tritt qualitativ das gleiche Verhalten auch beim DC-Ausgangsstrom auf. Bei jeder Änderung des Werts des Phasenwinkels ϕ (siehe Fig.2(a)) treten starke Oszillationen mit großer Amplitude beim Phasenstrom (siehe Fig.2(b)) in den Spannungsbrücken und beim DC-Strom (siehe Fig.2(c)) an der Eingangsseite auf, die bei den größten Änderungen des Phasenwinkels ϕ am größten sind, siehe dazu die Schaltvorgänge zu den Schaltzeiten 0,01s, 0,04s und 0,05s. Wie aus Fig.2(b) und (c) ersichtlich, klingen die Oszillationen mit einer langen Zeitkonstante ab. Die Zeitkonstante ist proportional zu L/R, wobei L die Summe aus der Streuinduktivität der Primärwicklung und der primärseitig bezogenen Streuinduktivität der Sekundärwicklung des Transformators bezeichnet, und R die Summe aus dem Widerstand der Primärwicklung und dem primärseitig bezogenen Widerstand der Sekundärwicklung ist. Eine hohe Streuinduktivität ist aber gerade für den Einsatz dieses DAB DC/DC-Wandlers in einem weiten Spannungsbereich zwischen Primär- und Sekundärspannung von hoher Bedeutung. Dagegen ist ein kleiner Widerstand R wünschenswert, um einen solchen DAB DC/DC-Wandler mit geringen ohmschen Verlusten und hoher Effizienz und damit höherem Wirkungsgrad bereitzustellen. Durch diese Randbedingungen besitzen die nach einer Leistungsänderung auftretenden Oszillationen eine lange Zeitkonstante. Die Oszillationen des DC-Stroms werden nach dem Stand der Technik unterdrückt, indem der Phasenwinkel ϕ nur langsam geändert wird, hier simuliert als stufenweise Änderung in vielen kleinen Schritten im Zeitintervall 0,03 s - 0,04 s, siehe Fig.2(a). Entsprechend sind die auftretenden Oszillationen des DC-Stroms (siehe Fig.2(c)) deutlich geringer als bei einer sprunghaften Änderung in einem Schritt.

Fig.3 zeigt eine erste Ausführungsform des erfindungsgemäßen Verfahrens für einen dreiphasigen DAB-DC/DC-Wandlers, mit dem die Oszillationen, wie vorher in Fig.2(c) dargestellt, vermieden werden können. Hier sind die primärseitigen Wechselspannungen 111, 112, 113 (durchgezogene Linien) und die sekundärseitigen Wechselspannungen 211, 212, 213 (gestrichelte Linien) gemäß der Simulationen für die Figuren 2, 4 und 6 als Rechteckspannungen dargestellt. Die DC-Eingangsspannung liegt an den Spannungsbrücken 11, 12, 13 mit den aktiven Schaltern an und wird in den Spannungsbrücken 11, 12, 13 durch die Schaltung der aktiven Schalter S1 (Schaltvorgang) in eine Wechselspannung 111, 112, 113 umgewandelt und in eine entsprechende Wechselspannung 211, 212, 213 über den Transformator 3 transformiert. Da die Schalter S1 in der Regel komplett eingeschaltet werden, ergeben sich an den Ausgangsbrücken 21, 22, 23 annähernd rechteckförmige Wechselspannungen 211, 212, 213 (Rechteckspannung). Die Spannung über den Transformatorwicklungen wird dadurch stufenförmig. Gegebenenfalls sind die Flanken der Rechteckspannung 111, 112, 113, 211, 212, 213 durch die Verwendung von sogenannten Snubbern nicht unendlich steil, d. h. die Form weicht von der Rechteckspannung (Stufenform an den Transformatorwicklungen) ab.

In Fig.3 werden die primär- und sekundärseitigen Wechselspannungen 111, 112, 113, 211, 212, 213 durch die Schalter S1, S2 erfindungsgemäß so geschaltet, dass der Schaltvorgang die Schaltung (Einstellung) des Phasenwinkels ϕ2 für alle drei Phasen bei den gleichen Flanken der primär- und sekundärseitigen Wechselspannung 111, 112, 113, 211, 212, 213 an den primär- und sekundärseitigen Spannungsbrücken erfolgt, hier jeweils an den fallenden Flanken der Wechselspannungen V1, V2 und V3 von ϕ1 auf ϕ2, wobei der primärseitige Schaltvorgang für die primärseitigen Wechselspannungen 111, 112, 113 für die zweite Phase zur Zeit t0, für die dritte Phase zur Zeit t0 + T/3 und für die erste Phase zur Zeit t0 + 2/3 T erfolgt. Die Schaltvorgänge für die sekundärseitigen Wechselspannungen 211, 212, 213 erfolgen in diesem Ausführungsbeispiel relativ zu den Schaltungen der primärseitigen Wechselspannungen um ϕ1 oder ϕ2 nachfolgend (verschoben) je nach Flankenorientierung relativ zur Flanke der ersten Schaltung. Der Ausdruck "nachfolgend" bezeichnet einen positiven Phasenwinkel ϕ > 0. Natürlich kann das obige Bespiel für ein erfindungsgemäßes Schaltverfahren entsprechend auch für sogenannte vorauseilende Phasenwinkel ϕ durchgeführt werden. Ein vorauseilender Phasenwinkel entspricht einem negativen Phasenwinkel ϕ < 0. Erfolgt die erste Schaltung an einer fallenden Flanke (t0, zweite Phase V2), so erfolgen die Schaltungen der sekundärseitigen Wechselspannungen 211, 213 der ersten und dritten Phasen um ϕ2 nacheilend (verschoben) zur Schaltung der entsprechenden primärseitigen Wechselspannungen 111, 113 bei den nächsten fallenden Flanken der sekundärseitigen Wechselspannungen 211, 213 der ersten und dritten Phasen. Bei vorherigen steigenden Flanken der sekundärseitigen Wechselspannungen 211,213 der ersten oder dritten Phasen erfolgt die Schaltung dagegen noch um ϕ1 nacheilend zur Schaltung der entsprechenden primärseitigen Wechselspannungen 111, 113.

In einem Ausführungsbeispiel, gezeigt in Fig.3, erfolgt das erste Schalten 1 s2 der primärseitigen (sekundärseitigen) Wechselspannung 112 (212) der zweiten primärseitigen (sekundärseitigen) Spannungsbrücke 12 (22) zum Zeitpunkt t0 und das erste Schalten 1 n2 der sekundärseitigen (primärseitigen) Wechselspannung 212 (112) der zweiten sekundärseitigen (primärseitigen) Spannungsbrücken 22 (12) nacheilende mit dem Phasenwinkel ϕ2 > 0, danach erfolgt das erste Schalten 1 s1 der primärseitigen (sekundärseitigen) Wechselspannung 111 (211) der ersten primärseitigen (sekundärseitigen) Spannungsbrücke 11 (21) zum Zeitpunkt t0 + T/6 und das ersts Schalten 1n1 der sekundärseitigen (primärseitigen) Wechselspannung 211 (111) der ersten sekundärseitigen (primärseitigen) Spannungsbrücke 21 (11) unabhängig vom vorherigen Schalten nacheilend mit dem Phasenwinkel ϕ1 > 0, danach erfolgt das erste Schalten 1s3 der primärseitigen (sekundärseitigen) Wechselspannung 113 (213) der dritten primärseitigen (sekundärseitigen) Spannungsbrücke 13 (23) zum Zeitpunkt t0 + T/3 und das erste Schalten 1 n3 der sekundärseitigen (primärseitigen) Wechselspannung 213 (113) der dritten sekundärseitigen (primärseitigen) Spannungsbrücke 23 (13) unabhängig von den vorherigen Schaltungen nacheilend mit dem Phasenwinkel ϕ2 > 0. Danach erfolgt das zweite Schalten 2s2 der primärseitigen (sekundärseitigen) Wechselspannung 112 (212) der zweiten primärseitigen (sekundärseitigen) Spannungsbrücke 12 (22) zum Zeitpunkt t0 + T/2 und das zweite Schalten 2n2 der sekundärseitigen (primärseitigen) Wechselspannung 212 (112) der zweiten sekundärseitigen (sekundärseitigen) Spannungsbrücke 22 (12) unabhängig zu den vorherigen Schaltungen nacheilend mit dem Phasenwinkel ϕ2 > 0. Danach erfolgt das zweite Schalten 2s1 der primärseitigen (sekundärseitigen) Wechselspannung 111 (211) der ersten primärseitigen (sekundärseitigen) Spannungsbrücke (11/21) zum Zeitpunkt t0 + 2/3*T und das zweite Schalten 2n1 der sekundärseitigen (primärseitigen) Wechselspannung 211 (111) der ersten sekundärseitigen (primärseitigen) Spannungsbrücke 21 (11) unabhängig zu den vorherigen Schaltungen nacheilend mit dem Phasenwinkel ϕ2 > 0. Danach erfolgt das zweite Schalten 2s3 der primärseitigen (sekundärseitigen) Wechselspannung 113 (213) der dritten primärseitigen (sekundärseitigen) Spannungsbrücke 13 (23) zum Zeitpunkt t0 + 5/6*T und das zweite Schalten 2n3 der sekundärseitigen (primärseitigen) Wechselspannung 213 (113) der dritten sekundärseitigen (primärseitigen) Spannungsbrücke 23 (13) unabhängig zu den vorherigen Schaltungen nacheilend mit einem Phasenwinkel ϕ2 > 0. Obiges Schaltverfahren kann alternativ auch mit negativen Phasenwinkeln durchgeführt werden. In diesem Fall würde das erste bzw. zweite Schalten der sekundärseitigen (primärseitigen) Wechselspannungen vorauseilend (voreilend) zum Schalten der primärseitigen (sekundärseitigen) Wechselspannung erfolgen. Die nicht in Klammern gesetzten Bezeichnungen "primärseitig" und "sekundärseitig" sowie die entsprechenden Bezugszeichen beziehen sich auf Schaltungen für einen Stromfluss in die eine Richtung des Gleichstromwandlers. Die in Klammern gesetzten Bezugszeichen und Bezeichnungen "(primärseitig)" und "(sekundärseitig)" beziehen sich auf die entsprechenden Schaltungen für den umgekehrten Stromfluss in die andere Richtung des Gleichstromwandlers. Mit diesem Verfahren sind auch eine schnelle Leistungsflussumkehr und eine symmetrische Stromverteilung in den drei Phasen möglich.

Fig.4 zeigt die simulierten Verläufe von (a) Phasenwinkel in Grad, (b) Phasenstrom in Ampere und (c) DC-Strom in Ampere für einen dreiphasigen Gleichspannungswandler nach Fig.1, der zur schnellen Änderung des Phasenwinkels und zur Vermeidung von Oszillationen des DC-Stroms mit dem erfindungsgemäßen Schaltverfahren nach Fig.3 betrieben wird. Mit dem voranstehenden Schaltverfahren nach Fig.3 erreicht der Phasenstrom nach T/3 bereits seinen Sollwert und der DC-Strom in Fig.4(c). zeigt keine der Oszillationen, die für ein Schaltverfahren gemäß dem Stand der Technik in Fig.2(c) zu sehen sind. Beim Schaltvorgang vom Phasenwinkel ϕ1 auf ϕ2 ist der Phasenstrom allerdings kurzzeitig überhöht, siehe Fig.4(b) insbesondere zum Zeitpunkt t = 0,05s, wo der Schaltvorgang einen Vorzeichenwechsel des Phasenwinkel (große Änderung) bewirkt. Entsprechende leichte Überhöhungen sind auch im DC-Strom in Fig.4(c) zu den Schaltzeitpunkten t = 0,01 s, 0,02s, 0,04s, 0,05s und 0,06s zu sehen. Der dargestellte DC-Strom in Fig.4(c) ist hier beispielshaft der DC-Eingangsstrom, allerdings tritt qualitativ das gleiche Verhalten auch beim DC-Ausgangsstrom auf. Mit einem Tiefpassfilter, beispielsweise ein Tiefpassfilter 1. Ordnung mit Ts = 1/6 ms, auf der Primärseite und Sekundärseite des Gleichspannungswandlers kann der DC-Strom der entsprechenden Seiten noch weiter geglättet werden. Ebenso können ein oder mehrere Kondensatoren auf der Primär- und/oder Sekundärseite zur Glättung angeordnet sein.

Fig.5 zeigt ein zu dem Schaltverfahren nach Fig.3 alternatives Schaltverfahren gemäß der vorliegenden Erfindung. Hierbei erfolgt der Schaltvorgang durch drei sukzessive Schaltungen der primär- und sekundärseitigen Wechselspannungen 11, 112, 113, 211, 212, 213 der Spannungsbrücken 11, 12, 13, 21, 22, 23 der jeweiligen drei Phasen um den Phasenwinkels ϕ = (ϕ1 + ϕ2)/2, wobei der primärseitige Schaltvorgang für die primärseitigen Wechselspannungen 111, 112, 113 zu den Zeiten t0, t0 +T/6, t0 + T/3, t0 = T/2, t0 + 2/3*T und t0 + 5/6*T erfolgt. Die Schaltvorgänge für die sekundärseitigen Wechselspannungen 211, 212, 213 erfolgen bei einer Änderung des Phasenwinkels in zwei Stufen um jeweils (ϕ1 + ϕ2)/2 verschoben abwechselnd an fallenden und steigenden Flanken der zweiten, ersten und dritten Phase - in der ersten Schaltung um (ϕ1 + ϕ2)/2 nachfolgend (verschoben) und in der zweiten Schaltung nachfolgend (verschoben) um ϕ2.

Hier sind die primärseitigen Wechselspannungen 111, 112, 113 (durchgezogene Linien) und die sekundärseitigen Wechselspannungen 211, 212, 213 (gestrichelte Linien) gemäß der Simulationen für die Figuren 2, 4 und 6 als Rechteckspannungen dargestellt. Die DC-Eingangsspannung liegt an den Spannungsbrücken 11, 12, 13 mit den aktiven Schaltern an und wird in den Spannungsbrücken 11, 12, 13 durch die Schaltung der aktiven Schalter S1 (Schaltvorgang) in eine Wechselspannung 111, 112, 113 umgewandelt und über den Transformator mit einer entsprechenden Wechselspannung 211, 212, 213 verbunden. Da die Schalter S1, S2 in der Regel komplett ein- oder ausgeschaltet werden, ergeben sich an den Eingangs- und Ausgangsbrücken 11, 12, 13, 21, 22, 23 annähernd rechteckförmige Wechselspannungen 111, 112, 113, 211, 212, 213 (Rechteckspannungen). Die Spannung über den Transformatorwicklungen wird dadurch stufenförmig. Gegebenenfalls sind die Flanken der Rechteckspannung 111, 112, 113, 211, 212, 213 durch die Verwendung von sogenannten Snubbern nicht unendlich steil, d. h. die Form weicht von der Rechteckspannung (Stufenform an den Transformatorwicklungen) ab.

In dem Ausführungsbeispiel, gezeigt in Fig.5, erfolgt das erste Schalten 1 s2 der primärseitigen (sekundärseitigen) Wechselspannung 112 (212) der zweiten primärseitigen (sekundärseitigen) Spannungsbrücke 12 (21) zum Zeitpunkt t0 und das erste Schalten 1 n2 der sekundärseitigen (primärseitigen) Wechselspannung 212 (112) der zweiten sekundärseitigen (primärseitigen) Spannungsbrücke 22 (12) nachfolgend mit einem positiven Phasenwinkel ϕ = (ϕ1 + ϕ2)/2, danach erfolgt das erste Schalten 1 s1 der primärseitigen (sekundärseitigen) Wechselspannung 111 (211) der ersten primärseitigen (sekundärseitigen) Spannungsbrücke 11 (21) zum Zeitpunkt t0 + T/6 und das erste Schalten 1 n1 der sekundärseitigen (primärseitigen) Wechselspannung 211/111 der ersten sekundärseitigen (primärseitigen) Spannungsbrücke 21 (11) unabhängig vom vorherigen Schalten nachfolgend mit dem positiven Phasenwinkels ϕ = (ϕ1 + ϕ2)/2. Danach erfolgt das erste Schalten 1 s3 der primärseitigen (sekundärseitigen) Wechselspannung 113 (213) der dritten primärseitigen (sekundärseitigen) Spannungsbrücke 13 (23) zum Zeitpunkt t0 + T/3 und das erste Schalten 1 n3 der sekundärseitigen (primärseitigen) Wechselspannung 213 (113) der dritten sekundärseitigen (primärseitigen) Spannungsbrücke 23 (13) unabhängig vom vorherigen Schalten nachfolgend mit dem positiven Phasenwinkel ϕ = (ϕ1 + ϕ2)/2. Die voranstehenden Schritte werden als jeweiliges zweites Schalten 2s2, 2n2, 2s1, 2n1, 2s3, 2n3 der primärseitigen (sekundärseitigen) Wechselspannung 111, 112, 113 (211, 212, 213) und als zweites nacheilendes Schalten der sekundärseitigen (primärseitigen) Wechselspannung 211, 212, 213 (111, 112, 113) für die zweiten, ersten und dritten primär- und sekundärseitigen Spannungsbrücken 21, 22, 11, 12, 13, 23 zur Einstellung des positiven Phasenwinkels ϕ2 wiederholt. Obiges Schaltverfahren kann alternativ auch mit negativen Phasenwinkeln durchgeführt werden. In diesem Fall würde das erste bzw. zweite Schalten der sekundärseitigen (primärseitigen) Wechselspannungen vorauseilend (voreilend) zum Schalten der primärseitigen (sekundärseitigen) Wechselspannung erfolgen. Die nicht in Klammern gesetzten Bezugszeichen und Bezeichnungen "primärseitig" und "sekundärseitig" sowie die entsprechenden Bezugszeichen beziehen sich auf Schaltungen für einen Stromfluss in die eine Richtung des Gleichstromwandlers. Die in Klammern gesetzten Bezeichnungen "(primärseitig)" und "(sekundärseitig)" beziehen sich auf die entsprechenden Schaltungen für den umgekehrten Stromfluss in die andere Richtung des Gleichstromwandlers. Mit diesem Verfahren sind auch eine schnelle Leistungsflussumkehr und eine symmetrische Stromverteilung in den drei Phasen möglich.

Fig.6 zeigt die simulierten Verläufe von (a) Phasenwinkel in Grad, (b) Phasenstrom in Ampere und (c) DC-Strom in Ampere für einen dreiphasigen Gleichspannungswandler nach Fig.1, der zur schnellen Änderung des Phasenwinkels und zur Vermeidung von Oszillationen des DC-Stroms mit dem erfindungsgemäßen Schaltverfahren nach Fig.5 betrieben wird. Mit dem voranstehenden alternativen erfindungsgemäßen Schaltverfahren nach Fig.5 erreicht der Phasenstrom nach T/2 bereits seinen Sollwert und der DC-Strom in Fig.6(c) zeigt ebenfalls keine der Oszillationen, die für ein Schaltverfahren gemäß dem Stand der Technik in Fig.2(c) zu sehen sind. Beim Schaltvorgang vom Phasenwinkel ϕ1 auf ϕ2 ist der Phasenstrom im Gegensatz zu dem erfindungsgemäßen Verfahren nach Fig 3 auch bei einem Vorzeichenwechsel des Phasenwinkels nicht überhöht, vergleiche dazu die zu Fig.4(b) entsprechenden Zeitpunkte (Schaltpunkte) in Fig.6(a) und (b). Genauso wie bei dem Verfahren nach Fig.3 kann auch hier mit einem Tiefpassfilter, beispielsweise ein Tiefpassfilter 1. Ordnung mit Ts = 1/6 ms, auf der Primärseite und Sekundärseite des Gleichspannungswandlers der DC-Strom der entsprechenden Seiten noch weiter geglättet werden. Ebenso können ein oder mehrere Kondensatoren auf der Primär und/oder Sekundärseite zur Glättung angeordnet sein.

In einer weiteren Ausführungsform können die Verfahren, wie in Fig.3 und 5 dargestellt, einen Schaltvorgang bewirken, der zur Einstellung des zweiten Phasenwinkels ϕ2 eine oder mehrere Perioden T der primärseitigen- und sekundärseitigen Wechselspannungen 111, 112, 113, 211, 212, 213 umfasst und wo der Phasenwinkel ϕ zwischen den primärseitigen- und sekundärseitigen Wechselspannungen 111, 112, 113, 211, 212, 213 an den Flanke schrittweise in mehreren Schritten auf den zweiten Phasenwinkel ϕ2 eingestellt wird. Hierbei kann die schrittweise Einstellung des Phasenwinkels ϕ2 in gleichgroßen Schritten linear erfolgt. Weiterhin kann der Phasenwinkel ϕ der steigenden und fallenden Flanken im Schaltvorgang ausgehend von den voranstehenden Phasenwinkeln zur Kompensation von Transformator- und Schaltereinflüssen angepasst werden. Außerdem kann der Gleichspannungswandler G, G3 so betrieben werden, dass die Phasenverschiebungen zwischen den primärseitigen Wechselspannungen 111, 112, 113 der primärseitigen Spannungsbrücken 11, 12, 13 untereinander und die Phasenverschiebungen zwischen den sekundärseitigen Wechselspannungen 211, 212, 213 der sekundärseitigen Spannungsbrücken 21, 22, 23 untereinander von 120° abweichen.

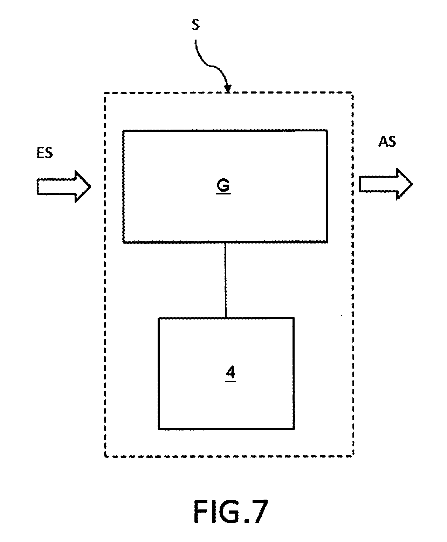

Fig.7 zeigt ein erfindungsgemäßes System S aus Gleichspannungswandler G und Steuereinheit 4, wobei die Steuereinheit 4 dazu ausgestaltet ist, die Steuerung der aktiven Schalter S1, S2 der primär- und sekundärseitigen Spannungsbrücken 11, 12, 13, 21, 22, 23 des mindestens dreiphasigen Gleichspannungswandlers G gemäß dem erfindungsgemäßen Verfahren, wie beispielhaft in den Fig. 3 und 5 für einen dreiphasigen Gleichspannungswandler dargestellt, auszuführen. In einer Ausführungsform des Systems S ist der Gleichspannungswandler G ein dreiphasiger Gleichspannungswandler mit drei aktiv geschalteten primärseitigen Spannungsbrücken 11, 12, 13 mit jeweils zwei oder mehr aktiven Schaltern S1 und drei aktiv geschalteten sekundärseitigen Spannungsbrücken 21, 22, 23 mit jeweils zwei oder mehr aktiven Schaltern S2. In einer weiteren Ausführungsform kann die Steuereinheit 4 dabei nach Wahl des Fachmanns als Steuerung 4 unter Verwendung eines oder mehreren DSPs (digitaler Signalprozessor), FPGAs (sogenannte "field programmable gate arrays"), CLPDs (sogenannte "complex programmable logic devices"), eines Microcontrollers oder unter Verwendung einer Kombination der voranstehend genannten Bauteile ausgeführt sein.

Die detaillierte Darstellung der Erfindung in diesem Abschnitt und in den Figuren ist als Beispiel für mögliche Ausführungsformen im Rahmen der Erfindung und daher nicht einschränkend zu verstehen. Insbesondere angegebene Größen sind auf die jeweiligen Betriebsbedingungen des Gleichrichters (Strom, Spannung) vom Fachmann anzupassen. Daher sind alle angegebenen Größen nur als Beispiele für bestimmte Ausführungsformen zu verstehen.

Alternative Ausführungsformen, die der Fachmann möglicherweise im Rahmen der vorliegenden Erfindung in Betracht zieht, sind vom Schutzbereich der vorliegenden Erfindung ebenfalls mit umfasst. In den Ansprüchen umfassen Ausdrücke wie "ein" auch die Mehrzahl. In den Ansprüchen angegebene Bezugszeichen sind nicht einschränkend auszulegen.

### Bezugszeichenliste

- G: Gleichspannungswandler (DAB-DC/DC-Wandler)
- G3: dreiphasiger Gleichspannungswandler (DAB-DC/DC-Wandler)
- 1: Primärseite
- 10: primärseitige Kondensatoren
- 11: erste primärseitige Spannungsbrücke
- 12: zweite primärseitige Spannungsbrücke
- 13: dritte erste primärseitige Spannungsbrücke
- 111: erste primärseitige Wechselspannung
- 112: zweite primärseitige Wechselspannung
- 113: dritte primärseitige Wechselspannung
- 1 s1, 1 s2, 1 s3: erstes Schalten der primärseitigen Spannungsbrücken 11, 12, 13
- 2s1, 2s2, 2s3: zweites Schalten der primärseitigen Spannungsbrücken 11, 12, 13
- S1: Schalter der primärseitigen Spannungsbrücken
- ES: Eingangsspannung für den Gleichspannungswandler
- 2: Sekundärseite
- 20: sekundärseitige Kondensatoren
- 21: erste sekundärseitige Spannungsbrücke
- 22: zweite sekundärseitige Spannungsbrücke
- 23: dritte sekundärseitige Spannungsbrücke
- 211: erste sekundärseitige Wechselspannung
- 212: zweite sekundärseitige Wechselspannung
- 213: dritte sekundärseitige Wechselspannung
- 1 n1, 1 n2, 1 n3: erstes Schalten der sekundärseitigen Spannungsbrücken 21, 22,23
- 2n1, 2n2, 2n3: zweites Schalten der sekundärseitigen Spannungsbrücken 21, 22,23
- S2: Schalter der sekundärseitigen Spannungsbrücken
- AS: Ausgangsspannung für den Gleichspannungswandler
- 3: Transformator, dreiphasiger Transformator
- 4: Steuereinheit (Steuerung) der Schalter
- ϕ: Phasenwinkel
- ϕ1: erster Phasenwinkel
- ϕ2: zweiter Phasenwinkel
- T: Periode der Wechselspannung
- t0: Anfangszeitpunkt des Schaltvorgangs
- PC: Phasenstrom
- DC: Gleichstrom an der Eingangsseite
- S: System aus Gleichspannungswandler und Steuereinheit
- V1, V2, V3: Spannung in der ersten, zweiten, dritte Phase

## Patentansprüche

1. Verfahren zum Betreiben eines mindestens dreiphasigen Gleichspannungswandlers (G) mit einer Primärseite (1) umfassend mindestens drei aktiv geschaltete primärseitige Spannungsbrücken (11, 12, 13) mit mehreren aktiven Schaltern (S1) zur Umwandlung einer DC-Eingangsspannung (ES) in primärseitige Wechselspannungen (111, 112, 113) für jede der primärseitigen Spannungsbrücken (11, 12, 13) und einer Sekundärseite (2) umfassend mindestens drei aktiv geschaltete sekundärseitige Spannungsbrücken (21, 22, 23) mit mehreren aktiven Schaltern (S2) zur Umwandlung der sekundärseitigen Wechselspannungen (211, 212, 213) für jede der sekundärseitigen Spannungsbrücken (21, 22, 23) in eine gemeinsame DC-Ausgangsspannung (AS), wobei jede der primärseitigen Spannungsbrücken (11, 12, 13) mit einer der sekundärseitigen Spannungsbrücken (21, 22, 23) über einen mehrphasigen Transformator (3) oder über jeweils einen Transformator (3) zu jeweils einer Phase gekoppelt ist, wobei die primärseitigen- und sekundärseitigen Wechselspannungen (111, 112, 113, 211, 212, 213) mit einer Periode T um einen Phasenwinkel ϕ verschoben sind, umfassend die Schritte des Einstellens des Phasenwinkels ϕ von einem ersten Phasenwinkel ϕ1 auf einen zweiten Phasenwinkel ϕ2 als Schaltvorgang zum Übertragen von Leistung von der Primär- (1) auf die Sekundärseite (2), **dadurch gekennzeichnet, dass** die primär- und sekundärseitigen Spannungsbrücken (11, 12, 13, 21, 22, 23) in dem Schaltvorgang so geschaltet werden, dass die Phasenwinkel ϕ der einzelnen Phasen im Schaltvorgang zeitlich verschoben unabhängig voneinander innerhalb einer Periode T einer Spannungswelle des Gleichspannungswandlers (G) geändert werden.

2. Das Verfahren nach Anspruch 1,
**dadurch gekennzeichnet,**
**dass** während des Schaltvorgangs der Phasenwinkel ϕ der verschiedenen Phasen unabhängig von fallenden und steigenden Flanken der primärseitigen- und sekundärseitigen Wechselspannungen (111, 112, 113, 211, 21, 213) eingestellt wird.

3. Das Verfahren nach einem der Ansprüche 1 oder 2,
**dadurch gekennzeichnet,**
**dass** die Phasenwinkel ϕ der einzelnen Phasen bei Unsymmetrien der Transformatoren (3) zur Symmetrierung der Ströme in den Phasen unterschiedlich eingestellt werden können.

4. Das Verfahren nach einem der Ansprüche 1 bis 3, wobei der Gleichspannungswandler (G) ein dreiphasiger Gleichspannungswandler (G3) mit drei aktiv geschalteten primärseitigen Spannungsbrücken (11, 12, 13) mit jeweils zwei oder mehr aktiven Schaltern (S1) und drei aktiv geschalteten sekundärseitigen Spannungsbrücken (21, 22, 23) mit jeweils zwei oder mehr aktiven Schaltern (S2) ist, wobei der Schaltvorgang die Einstellung des Phasenwinkels ϕ2 für alle drei Phasen bei den gleichen Flanken der primär- und sekundärseitigen Wechselspannung (111, 112, 113, 211, 212, 213) an den primär- und sekundärseitigen Spannungsbrücken erfolgt.

5. Das Verfahren nach Anspruch 4, des Weiteren umfassend die Schritte:
- erstes Schalten (1 s2) der primärseitigen/sekundärseitigen Wechselspannung (112/212) der zweiten primärseitigen/sekundärseitigen Spannungsbrücke (12/22) zum Zeitpunkt t0 und erstes um den Phasenwinkel ϕ2 verschobenes Schalten (1 n2) der sekundärseitigen/primärseitigen Wechselspannung (212/112) der zweiten sekundärseitigen/primärseitigen Spannungsbrücken (22/12),
- erstes Schalten (1s1) der primärseitigen/sekundärseitigen Wechselspannung (111/211) der ersten primärseitigen/sekundärseitigen Spannungsbrücke (11/21) zum Zeitpunkt t0 + T/6 und erstes um den Phasenwinkel ϕ1 verschobenes Schalten (1n1) der sekundärseitigen/primärseitigen Wechselspannung (211/111) der ersten sekundärseitigen/primärseitigen Spannungsbrücke (21/11),
- erstes Schalten (1 s3) der primärseitigen/sekundärseitigen Wechselspannung (113/213) der dritten primärseitigen/sekundärseitigen Spannungsbrücke (13/23) zum Zeitpunkt t0 + T/3 und erstes um den Phasenwinkel ϕ2 verschobenes Schalten (1 n3) der sekundärseitigen/primärseitigen Wechselspannung (213/113) der dritten sekundärseitigen/primärseitigen Spannungsbrücke (23/13),
- zweites Schalten (2s2) der primärseitigen/sekundärseitigen Wechselspannung (112/212) der zweiten primärseitigen/sekundärseitigen Spannungsbrücke (12/22) zum Zeitpunkt t0 + T/2 und zweites um den Pha5 senwinkel ϕ2 verschobenes Schalten (2n2) der sekundärseitigen/primärseitigen Wechselspannung (212/112) der zweiten sekundärseitigen/sekundärseitigen Spannungsbrücke (22/12),
- zweites Schalten (2s1) der primärseitigen/sekundärseitigen Wechselspannung (111/211) der ersten primärseitigen/sekundärseitigen Spannungsbrücke (11/21) zum Zeitpunkt t0 + 2/3*T und zweites um den Phasenwinkel ϕ2 verschobenes Schalten (2n1) der sekundärseitigen/primärseitigen Wechselspannung (211/111) der ersten sekundärseitigen/primärseitigen Spannungsbrücke (21/11),
- zweites Schalten (2s3) der primärseitigen/sekundärseitigen Wechselspannung (113/213) der dritten primärseitigen/sekundärseitigen Spannungsbrücke (13/23) zum Zeitpunkt t0 + 5/6*T und zweites um den Phasenwinkel ϕ2 verschobenes Schalten (2n3) der sekundärseitigen/primärseitigen Wechselspannung (213/113) der dritten sekundärseitigen/primärseitigen Spannungsbrücke (23/13).

6. Das Verfahren nach Anspruch 4 oder 5,
**dadurch gekennzeichnet,**
**dass** die Änderung der Phasenwinkel an den gleichen Flanken der primärseitigen und sekundärseitigen Wechselspannungen (1n2, 1n3, 2n1) stattfindet.

7. Das Verfahren nach einem der Ansprüche 1 bis 3,
**dadurch gekennzeichnet,**
**dass** die Phasenwinkel ϕ für steigende und fallende Flanken unterschiedlich sind.

8. Das Verfahren nach Anspruch 7, wobei der Gleichspannungswandler (G) ein dreiphasiger Gleichspannungswandler (G3) mit drei aktiv geschalteten primärseitigen Spannungsbrücken (11, 12, 13) mit jeweils zwei oder mehr aktiven Schaltern (S1) und drei aktiv geschalteten sekundärseitigen Spannungsbrücken (21, 22, 23) mit jeweils zwei oder mehr aktiven Schaltern (S2) ist, wobei der Schaltvorgang drei sukzessive Schaltungen der primär- und sekundärseitigen Wechselspannungen (111, 112, 113, 211, 212, 213) der Spannungsbrücken (11, 12, 13, 21, 22, 23) der jeweiligen drei Phasen um den Phasenwinkel ϕ = (ϕ1 + ϕ2)/2 umfasst.

9. Das Verfahren nach Anspruch 8, des Weiteren umfassend die Schritte:
- Erstes Schalten (1 s2) der primärseitigen/sekundärseitigen Wechselspannung (112/212) der zweiten primärseitigen/sekundärseitigen Spannungsbrücke (12/21) zum Zeitpunkt t0 und erstes um den Phasenwinkel ϕ = (ϕ1 + ϕ2)/2 verschobenes Schalten (1 n2) der sekundärseitigen/primärseitigen Wechselspannung (212/112) der zweiten sekundärseitigen/primärseitigen Spannungsbrücke (22/12),
- Erstes Schalten (1s1) der primärseitigen/sekundärseitigen Wechselspannung (111/211) der ersten primärseitigen/sekundärseitigen Spannungsbrücke (11/21) zum Zeitpunkt t0 + T/6 und erstes um den Phasenwinkel ϕ = (ϕ1 + ϕ2)/2 verschobenes Schalten (1 n1) der sekundärseitigen/primärseitigen Wechselspannung (211/111) der ersten sekundärseitigen/primärseitigen Spannungsbrücke (21/11),
- Erstes Schalten (1 s3) der primärseitigen/sekundärseitigen Wechselspannung (113/213) der dritten primärseitigen/sekundärseitigen Spannungsbrücke (13/23) zum Zeitpunkt t0 + T/3 und erstes um den Phasenwinkel ϕ = (ϕ1 + ϕ2)/2 verschobenes Schalten (1 n3) der sekundärseitigen/primärseitigen Wechselspannung (213/113) der dritten sekundärseitigen/primärseitigen Spannungsbrücke (23/13),
- Widerholen der voranstehenden Schritte als jeweiliges zweites Schalten (2s2, 2n2, 2s1, 2n1, 2s3, 2n3) der primärseitigen/sekundärseitigen Wechselspannung (111, 112, 113 / 211, 212, 213) und zweites um den Phasenwinkel ϕ2 verschobenes Schalten der sekundärseitigen/primärseitigen Wechselspannung (211, 212, 213 / 111, 112, 113) für die zweiten, ersten und dritten primär- und sekundärseitigen Spannungsbrücken (21, 22, 11, 12, 13, 23).

10. Das Verfahren nach einem der voranstehenden Ansprüche,
**dadurch gekennzeichnet,**
**dass** der Schaltvorgang zur Einstellung des zweiten Phasenwinkels ϕ2 eine oder mehrere Perioden T der primärseitigen- und sekundärseitigen Wechselspannungen (111, 112, 113, 211, 212, 213) umfasst und der Phasenwinkel ϕ zwischen den primärseitigen- und sekundärseitigen Wechselspannungen (111, 112, 113, 211, 212, 213) an den Flanke schrittweise in mehreren Schritten auf den zweiten Phasenwinkel ϕ2 eingestellt wird.

11. Das Verfahren nach Anspruch 10,
**dadurch gekennzeichnet,**
**dass** die schrittweise Einstellung des Phasenwinkels ϕ2 in gleichgroßen Schritten linear erfolgt.

12. Das Verfahren nach einem der voranstehenden Ansprüche,
**dadurch gekennzeichnet,**
**dass** die Phasenwinkel ϕ der steigenden und fallenden Flanken im Schaltvorgang ausgehend von den voranstehenden Phasenwinkeln zur Kompensation von Transformator- und Schaltereinflüssen angepasst werden.

13. Das Verfahren nach einem der voranstehenden Ansprüche,
**dadurch gekennzeichnet,**
**dass** der Gleichspannungswandler (G, G3) so betrieben wird, dass die Phasenverschiebungen zwischen den primärseitigen Wechselspannungen (111, 112, 113) der primärseitigen Spannungsbrücken (11, 12, 13) untereinander und die Phasenverschiebungen zwischen den sekundärseitigen Wechselspannungen (211, 212, 213) der sekundärseitigen Spannungsbrücken (21, 22, 23) untereinander von 120° abweichen.

14. Ein System (S) aus einem mindestens dreiphasigen Gleichspannungswandler (G, G3) mit einer Primärseite (1) umfassend mindestens drei aktiv geschaltete primärseitige Spannungsbrücken (11, 12, 13) mit mehreren aktiven Schaltern (S1) zur Umwandlung einer DC-Eingangsspannung (ES) in primärseitige Wechselspannungen (111, 112, 113) für jede der primärseitigen Spannungsbrücken (11, 12, 13) und einer Sekundärseite (2) umfassend mindestens drei aktiv geschaltete sekundärseitige Spannungsbrücken (21, 22, 23) mit mehreren aktiven Schaltern (S2) zur Umwandlung der sekundärseitigen Wechselspannungen (211, 212, 213) für jede der sekundärseitigen Spannungsbrücken (21, 22, 23) in eine gemeinsame DC-Ausgangsspannung (AS), wobei jede der primärseitigen Spannungsbrücken (11, 112, 13) mit einer der sekundärseitigen Spannungsbrücken (21, 22, 23) über einen mehrphasigen Transformator (3) oder über jeweils einen Transformator (3) zu jeweils einer Phase gekoppelt ist, wobei die primärseitigen- und sekundärseitigen Wechselspannungen (111, 112, 113, 211, 212, 213) mit einer Periode T um einen Phasenwinkel ϕ verschoben sind, und mindestens einer Steuereinheit (4),
**dadurch gekennzeichnet,**
**dass** die Steuereinheit (4) dazu ausgestaltet ist, die Steuerung der aktiven Schalter (S1, S2) der primär- und sekundärseitigen Spannungsbrücken (11, 12, 13, 21, 22, 23) des mindestens dreiphasigen Gleichspannungswandler (G, G3) gemäß dem Verfahren nach Anspruch 1 auszuführen.

15. Das System (S) nach Anspruch 14,
**dadurch gekennzeichnet,**
**dass** der Gleichspannungswandler (G) ein dreiphasiger Gleichspannungswandler (G3) mit drei aktiv geschalteten primärseitigen Spannungsbrücken (11, 12, 13) mit jeweils zwei oder mehr aktiven Schaltern (S1) und drei aktiv geschalteten sekundärseitigen Spannungsbrücken (21, 22, 23) mit jeweils zwei oder mehr aktiven Schaltern (S2) ist.

## Claims

1. A method for operating an at least three-phase DC-DC converter (G) having a primary side (1) comprising at least three actively switched primary voltage bridges (11, 12, 13) with several active switches (S1) for converting a DC input voltage (ES) into primary alternating voltages (111, 112, 113) for each of the primary voltage bridges (11, 12, 13), and having a secondary side (2) comprising at least three actively switched secondary voltage bridges (21, 22, 23) with several active switches (S2) for converting the secondary alternating voltages (211, 212, 213) into a joint DC output voltage (AS) for each of the secondary voltage bridges (21, 22, 23), whereby each of the primary voltage bridges (11, 12, 13) is coupled to one of the secondary voltage bridges (21, 22, 23) via a multi-phase transformer (3), or via a transformer (3) to one phase in each case, whereby the primary and secondary alternating voltages (111, 112, 113, 211, 212, 213) with a period T are shifted by a phase angle ϕ, said method comprising the steps of setting the phase angle ϕ from a first phase angle ϕ1 to a second phase angle ϕ2 as the switching operation for transferring power from the primary side (1) to the secondary side (2), **characterized in that** the primary and secondary voltage bridges (11, 12, 13, 21, 22, 23) are switched during the switching operation in such a way that the phase angles ϕ of the individual phases are changed during the switching operation in a time-shifted manner, independently of each other, within a period T of a voltage ripple of the DC-DC converter (G).

2. The method according to claim 1,
**characterized in that**
during the switching operation the phase angle ϕ of the various phases is set independently of falling and rising edges of the primary and secondary alternating voltages (111, 112, 113, 211, 212, 213).

3. The method according to claim 1 or 2,
**characterized in that,**
in case of imbalances on the part of the transformers (3), the phase angles ϕ of the individual phases can be set differently in order to balance the currents in the phases.

4. The method according to one of claims 1 to 3,
**characterized in that**
the DC-DC converter (G) is a three-phase DC-DC converter (G3) with three actively switched primary voltage bridges (11, 12, 13), each having two or more active switches (S1), and three actively switched secondary voltage bridges (21, 22, 23), each having two or more active switches (S2), whereby, during the switching operation, the phase angle ϕ2 of all three phases is set at the same edges of the primary and secondary alternating voltages (111, 112, 113, 211, 212, 213) at the primary and secondary voltage bridges.

5. The method according to claim 4, also comprising the following steps:
• first switching (1 s2) of the primary/secondary alternating voltage (112/212) of the second primary/secondary voltage bridge (12/22) at the point in time t0, and first switching (1n2) of the secondary/primary alternating voltage (212/112) of the second secondary/primary voltage bridges (22/12), shifted by the phase angle ϕ2,
• first switching (1s1) of the primary/secondary alternating voltage (111/211) of the first primary/secondary voltage bridge (11/12) at the point in time t0+T/6, and first switching (1n1) of the secondary/primary alternating voltage (211/111) of the first secondary/primary voltage bridge (21/11), shifted by the phase angle ϕ1,
• first switching (1 s3) of the primary/secondary alternating voltage (113/213) of the third primary/secondary voltage bridge (13/23) at the point in time t0+T/3, and first switching (1 n3) of the secondary/primary alternating voltage (213/113) of the third secondary/primary voltage bridge (23/13), shifted by the phase angle ϕ2,
• second switching (2s2) of the primary/secondary alternating voltage (112/212) of the second primary/secondary voltage bridge (12/22) at the point in time t0+T/2, and second switching (2n2) of the secondary/primary alternating voltage (212/112) of the second secondary/primary voltage bridge (22/12), shifted by the phase angle ϕ2,
• second switching (2s1) of the primary/secondary alternating voltage (111/211) of the first primary/secondary voltage bridge (11/21) at the point in time t0+2/3*T, and second switching (2n1) of the secondary/primary alternating voltage (211/111) of the first secondary/primary voltage bridge (21/11), shifted by the phase angle ϕ2,
• second switching (2s3) of the primary/secondary alternating voltage (113/213) of the third primary/secondary voltage bridge (13/23) at the point in time t0+5/6*T, and second switching (2n3) of the secondary/primary alternating voltage (213/113) of the third secondary/primary voltage bridge (23/13), shifted by the phase angle ϕ2.

6. The method according to claim 4 or 5,
**characterized in that**
the change of the phase angles takes place at the same edges of the primary and secondary alternating voltages (1 n2, 1 n3, 2n1).

7. The method according to one of claims 1 to 3,
**characterized in that**
the phase angles ϕ are different for rising and falling edges.

8. The method according to claim 7, wherein the DC-DC converter (G) is a three-phase DC-DC converter (G3) with three actively switched primary voltage bridges (11, 12, 13), each having two or more active switches (S1), and three actively switched secondary voltage bridges (21, 22, 23), each having two or more active switches (S2), whereby the switching operation comprises three successive switching operations of the primary and secondary alternating voltages (111, 112, 113, 211, 212, 213) of the voltage bridges (11, 12, 13, 21, 22, 23) of the appertaining three phases by the phase angle ϕ = (ϕ1 + ϕ2)/2.

9. The method according to 8, also comprising the following steps:
• first switching (1 s2) of the primary/secondary alternating voltage (112/212) of the second primary/secondary voltage bridge (12/21) at the point in time t0, and first switching (1 n2) of the secondary/primary alternating voltage (212/112) of the second secondary/primary voltage bridge (22/12), shifted by the phase angle ϕ = (ϕ1+ϕ2)/2,
• first switching (1s1) of the primary/secondary alternating voltage (111/211) of the first primary/secondary voltage bridge (11/21) at the point in time t0+T/6, and first switching (1n1) of the secondary/primary alternating voltage (211/111) of the first secondary/primary voltage bridge (21/11), shifted by the phase angle ϕ = (ϕ1 + ϕ2)/2,
• first switching (1 s3) of the primary/secondary alternating voltage (113/213) of the third primary/secondary voltage bridge (13/23) at the point in time t0+T/3, and first switching (1 n3) of the secondary/primary alternating voltage (213/113) of the third secondary/primary voltage bridge (23/13), shifted by the phase angle ϕ = (ϕ1 + ϕ2)/2,
• repeating the above-mentioned steps, each time as a second switching (2s2, 2n2, 2s1, 2n1, 2s3, 2n3) of the primary/secondary alternating voltage (111, 112, 113 / 211, 212, 213) and as a second switching of the secondary/primary alternating voltage (211, 212, 213 / 111, 112, 113) of the first, second and third primary/secondary voltage bridges (21, 22, 11, 12, 13, 23), shifted by the phase angle ϕ2.

10. The method according to one of the preceding claims,
**characterized in that**
the switching operation for setting the second phase angle ϕ2 comprises one or more periods T of the primary and secondary alternating voltages (111, 112, 113, 211, 212, 213), and the phase angle ϕ between the primary and secondary alternating voltages (111, 112, 113, 211, 212, 213) is set stepwise to the second phase angle ϕ2 on the edge.

11. The method according to claim 10,
**characterized in that**
the stepwise setting of the phase angle ϕ2 is done linearly in steps of the same size.

12. The method according to one of the preceding claims,
**characterized in that,**
the phase angles ϕ of the rising and falling edges are adapted during the switching operation on the basis of the above-mentioned phase angles in order to compensate for transformer and switch influences.

13. The method according to one of the preceding claims,
**characterized in that**
the DC-DC converter (G, G3) is operated in such a way that the phase shifts of the primary alternating voltages (111, 112, 113) of the primary voltage bridges (11, 12, 13) among each other as well as the phase shifts of the secondary alternating voltages (211,212, 213) of the secondary voltage bridges (21, 22, 23) among each other deviate from 120°.

14. A system (S) consisting of an at least three-phase DC-DC converter (G, G3) having a primary side (1) comprising at least three actively switched primary voltage bridges (11, 12, 13) with several active switches (S1) for converting a DC input voltage (ES) into primary alternating voltages (111, 112, 113) for each of the primary voltage bridges (11, 12, 13), and having a secondary side (2) comprising at least three actively switched secondary voltage bridges (21, 22, 23) with several active switches (S2) for converting the secondary alternating voltages (211, 212, 213) into a joint DC output voltage (AS) for each of the secondary voltage bridges (21, 22, 23), whereby each of the primary voltage bridges (11, 12, 13) is coupled to one of the secondary voltage bridges (21, 22, 23) via a multi-phase transformer (3), or via a transformer (3) to one phase in each case, whereby the primary and secondary alternating voltages (111, 112, 113, 211, 212, 213) are shifted by a phase angle ϕ with a period T, said system consisting of at least one control unit (4),
**characterized in that**
the control unit (4) is configured to carry out the control of the active switches (S1, S2) of the primary and secondary voltage bridges (11, 12, 13, 21, 22, 23) of the at least three-phase DC-DC converter (G, G3) by means of the method according to claim 1.

15. The system (S) according to claim 14,
**characterized in that**
the DC-DC converter (G) is a three-phase DC-DC converter (G3) with three actively switched primary voltage bridges (11, 12, 13), each having two or more active switches (S1), and three actively switched secondary voltage bridges (21, 22, 23), each having two or more switches (S2).

## Revendications

1. Procédé de fonctionnement d'au moins un convertisseur de tension continue triphasé (G) avec un côté primaire (1) comprenant au moins trois ponts de tension côté primaire (11, 12, 13), commutés activement et comportant plusieurs commutateurs actifs (S1) pour convertir une tension d'entrée continue (ES) en tensions alternatives côté primaire (111, 112, 113) pour chacun des ponts de tension côté primaire (11, 12, 13), et un côté secondaire (2) comprenant au moins trois ponts de tension côté secondaire (21, 22, 23), commutés activement et comportant plusieurs commutateurs actifs (S2) pour convertir les tensions alternatives côté secondaire (211, 212, 213) pour chacun des ponts de tension côté secondaire (21, 22, 23) en une tension de sortie continue commune (AS), chacun des ponts de tension côté primaire (11, 12, 13) étant couplé à l'un des ponts de tension côté secondaire (21, 22, 23) par un transformateur multiphasé (3) ou par respectivement un transformateur (3) pour respectivement une phase, les tensions alternatives côté primaire et côté secondaire (111, 112, 113, 211, 212, 213) étant déphasées d'un angle de phase ϕ avec une période T, comprenant les étapes de réglage de l'angle de phase ϕ d'un premier angle de phase ϕ1 sur un deuxième angle de phase ϕ2 en tant qu'opération de commutation pour le transfert de puissance du côté primaire (1) au côté secondaire (2), **caractérisé en ce que** les ponts de tension côté primaire et côté secondaire (11, 12, 13, 21, 22, 23) sont commutés de manière telle, dans l'opération de commutation, que les angles de phase ϕ des différentes phases sont modifiés de manière décalée temporellement, dans l'opération de commutation, indépendamment l'un de l'autre dans une période T d'une onde de tension du convertisseur de tension continue (G).

2. Procédé selon la revendication 1, **caractérisé en ce que**, pendant l'opération de commutation, l'angle de phase ϕ des différentes phases est réglé indépendamment de flancs montants et descendants des tensions alternatives côté primaire et côté secondaire (111, 112, 113, 211, 212, 213).

3. Procédé selon l'une des revendications 1 ou 2, **caractérisé en ce que** les angles de phase ϕ des différentes phases peuvent être réglés différemment en cas d'asymétries des transformateurs (3) pour rendre les courants symétriques dans les phases.

4. Procédé selon l'une des revendications 1 à 3, le convertisseur de tension continue (G) étant un convertisseur de tension continue triphasé (G3) avec trois ponts de tension côté primaire (11, 12, 13), commutés activement et comportant respectivement deux commutateurs actifs (S1) ou plus, et trois ponts de tension côté secondaire (21, 22, 23), commutés activement et comportant respectivement deux commutateurs actifs (S2) ou plus, l'opération de commutation effectuant le réglage de l'angle de phase ϕ2 pour toutes les trois phases pour les mêmes flancs de la tension alternative côté primaire et côté secondaire (111, 112, 113, 211, 212, 213) sur les ponts de tension côté primaire et côté secondaire.

5. Procédé selon la revendication 4, comprenant en outre les étapes suivantes :
- première commutation (1 s2) de la tension alternative côté primaire/côté secondaire (112/212) du deuxième pont de tension côté primaire/côté secondaire (12/22) à l'instant t0 et première commutation (1 n2), déphasée de l'angle de phase ϕ2, de la tension alternative côté secondaire/côté primaire (212/112) des deuxièmes ponts de tension côté secondaire/côté primaire (22/12) ;
- première commutation (1s1) de la tension alternative côté primaire/côté secondaire (111/211) du premier pont de tension côté primaire/côté secondaire (11/21) à l'instant t0 + T/6 et première commutation (1n1), déphasée de l'angle de phase ϕ1, de la tension alternative côté secondaire/côté primaire (211/111) du premier pont de tension côté secondaire/côté primaire (21/11) ;
- première commutation (1 s3) de la tension alternative côté primaire/côté secondaire (113/213) du troisième pont de tension côté primaire/côté secondaire (13/23) à l'instant t0 + T/3 et première commutation (1 n3), déphasée de l'angle de phase ϕ2, de la tension alternative côté secondaire/côté primaire (213/113) du troisième pont de tension côté secondaire/côté primaire (23/13) ;
- deuxième commutation (2s2) de la tension alternative côté primaire/côté secondaire (112/212) du deuxième pont de tension côté primaire/côté secondaire (12/22) à l'instant t0 + T/2 et deuxième commutation (2n2), déphasée de l'angle de phase ϕ2, de la tension alternative côté secondaire/côté primaire (212/112) du deuxième pont de tension côté secondaire/côté primaire (22/12) ;
- deuxième commutation (2s1) de la tension alternative côté primaire/côté secondaire (111/211) du premier pont de tension côté primaire/côté secondaire (11/21) à l'instant t0 + 2/3*T et deuxième commutation (2n1), déphasée de l'angle de phase ϕ2, de la tension alternative côté secondaire/côté primaire (211/111) du premier pont de tension côté secondaire/côté primaire (21/11) ;
- deuxième commutation (2s3) de la tension alternative côté primaire/côté secondaire (113/213) du troisième pont de tension côté primaire/côté secondaire (13/23) à l'instant t0 + 5/6*T et deuxième commutation (2n3), déphasée de l'angle de phase ϕ2, de la tension alternative côté secondaire/côté primaire (213/113) du troisième pont de tension côté secondaire/côté primaire (23/13).

6. Procédé selon la revendication 4 ou 5, **caractérisé en ce que** la modification des angles de phase a lieu sur les mêmes flancs des tensions alternatives côté primaire et côté secondaire (1 n2, 1 n3, 2n1).

7. Procédé selon l'une des revendications 1 à 3, **caractérisé en ce que** les angles de phase ϕ sont différents pour des flancs montants et descendants.

8. Procédé selon la revendication 7, **caractérisé en ce que** le convertisseur de tension continue (G) est un convertisseur de tension continue triphasé (G3) avec trois ponts de tension côté primaire (11, 12, 13), commutés activement et comportant respectivement deux commutateurs actifs (S1) ou plus et trois ponts de tension côté secondaire (21, 22, 23), commutés activement et comportant respectivement deux commutateurs actifs (S2) ou plus, l'opération de commutation comprenant trois commutations successives des tensions alternatives côté primaire et côté secondaire (111, 112, 113, 211, 212, 213) des ponts de tension (11, 12, 13, 21, 22, 23) des trois phases respectives de l'angle de phase ϕ = (ϕ1 + ϕ2)/2.

9. Procédé selon la revendication 8, comprenant en outre les étapes suivantes :
- première commutation (1 s2) de la tension alternative côté primaire/côté secondaire (112/212) du deuxième pont de tension côté primaire/côté secondaire (12/21) à l'instant t0 et première commutation (1 n2), déphasée de l'angle de phase ϕ = (ϕ1 + ϕ2)/2, de la tension alternative côté secondaire/côté primaire (212/112) du deuxième pont de tension côté secondaire/côté primaire (22/12) ;
- première commutation (1s1) de la tension alternative côté primaire/côté secondaire (111/211) du premier pont de tension côté primaire/côté secondaire (11/21) à l'instant t0 + T/6 et première commutation (1n1), déphasée de l'angle de phase ϕ = (ϕ1 + ϕ2)/2, de la tension alternative côté secondaire/côté primaire (211/111) du premier pont de tension côté secondaire/côté primaire (21/11) ;
- première commutation (1 s3) de la tension alternative côté primaire/côté secondaire (113/213) du troisième pont de tension côté primaire/côté secondaire (13/23) à l'instant t0 + T/3 et première commutation (1 n3), déphasée de l'angle de phase ϕ = (ϕ1 + ϕ2)/2, de la tension alternative côté secondaire/côté primaire (213/113) du troisième pont de tension côté secondaire/côté primaire (23/13) ;
- répétition des étapes précédentes en tant que deuxième commutation respective (2s2, 2n2, 2s1, 2s3, 2n3) de la tension alternative côté primaire/côté secondaire (111, 112, 113/211, 212, 213) et deuxième commutation, déphasée de l'angle de phase ϕ2, de la tension alternative côté secondaire/côté primaire (211, 212, 213/111, 112, 113) pour les deuxième, premier et troisième ponts de tension côté primaire et côté secondaire (21, 22, 11, 12, 13, 23).

10. Procédé selon l'une des revendications précédentes, **caractérisé en ce que** l'opération de commutation comprend, pour le réglage du deuxième angle de phase ϕ2, une ou plusieurs périodes T des tensions alternatives côté primaire et côté secondaire (111, 112, 113, 211, 212, 213) et **en ce que** l'angle de phase ϕ, entre les tensions alternatives côté primaire et côté secondaire (111, 112, 113, 211, 212, 213), est, sur les flancs, réglé progressivement, en plusieurs étapes, sur le deuxième angle de phase ϕ2.

11. Procédé selon la revendication 10, **caractérisé en ce que** le réglage progressif de l'angle de phase ϕ2 s'effectue linéairement par étapes de même taille.

12. Procédé selon l'une des revendications précédentes, **caractérisé en ce que** les angles de phase ϕ des flancs montants et descendants sont adaptés, dans l'opération de commutation, à partir des angles de phase précédents, pour compenser des influences de transformateur et de commutateur.

13. Procédé selon l'une des revendications précédentes, **caractérisé en ce que** le convertisseur de tension continue (G, G3) fonctionne de manière telle que les décalages de phase entre les tensions alternatives côté primaire (111, 112, 113) des ponts de tension côté primaire (11, 12, 13) diffèrent entre eux et que les décalages de phase entre les tensions alternatives côté secondaire (211, 212, 213) des ponts de tension côté secondaire (21, 22, 23) diffèrent entre eux de 120°.

14. Système (S) composé d'au moins un convertisseur de tension continue triphasé (G, G3) avec un côté primaire (1) comprenant au moins trois ponts de tension côté primaire (11, 12, 13), commutés activement et comportant plusieurs commutateurs actifs (S1) pour convertir une tension d'entrée continue (ES) en tensions alternatives côté primaire (111, 112, 113) pour chacun des ponts de tension côté primaire (11, 12, 13) et un côté secondaire (2) comprenant au moins trois ponts de tension côté secondaire (21, 22, 23), commutés activement et comportant plusieurs commutateurs actifs (S2) pour convertir les tensions alternatives côté secondaire (211, 212, 213) pour chacun des ponts de tension côté secondaire (21, 22, 23) en une tension de sortie continue commune (AS), chacun des ponts de tension côté primaire (11, 12, 13) étant couplé à l'un des ponts de tension côté secondaire (21, 22, 23) par un transformateur multiphasé (3) ou par respectivement un transformateur (3) pour respectivement une phase, les tensions alternatives côté primaire et côté secondaire (111, 112, 113, 211, 212, 213) étant déphasées d'un angle de phase ϕ avec une période T, et au moins une unité de commande (4),
**caractérisé en ce que**
l'unité de commande (4) est conçue pour exécuter la commande des commutateurs actifs (S1, S2) des ponts de tension côté primaire et côté secondaire (11, 12, 13, 21, 22, 23) du convertisseur de tension continue au moins triphasé (G, G3) conformément au procédé selon la revendication 1.

15. Système (S) selon la revendication 14, **caractérisé en ce que** le convertisseur de tension continue (G) est un convertisseur de tension continue triphasé (G3) avec trois ponts de tension côté primaire (11, 12, 13), commutés activement et comportant respectivement deux commutateurs actifs (S1) ou plus, et trois ponts de tension côté secondaire (21, 22, 23), commutés activement et comportant respectivement deux commutateurs actifs (S2) ou plus.
